# EUROPEAN PATENT SPECIFICATION

(11) **EP 2 682 261 B1**
(45) Date of publication and mention of the grant of the patent: **04.03.2015**
(21) Application number: 12397520.3
(22) Date of filing: 05.07.2012
(51) Int. Cl.: B32B 3/30, B32B 21/04, B32B 21/12, B32B 21/14

(54) **An extendable profile**
Erweiterbares Profil
Profil extensible

(43) Date of publication of application: 08.01.2014
(73) Proprietor: UPM-Kymmene Wood Oy, 15140 Lahti (FI)
(72) Inventor: Tilli, Mikko, 15870 Hollola (FI)
(74) Representative: Tampereen Patenttitoimisto Oy

(56) References cited:
- EP-A1- 0 947 298
- WO-A1-2008/020724
- WO-A2-2011/080400
- US-A1- 2003 041 545

## Description

### Field of the Invention

The invention relates to an extendable profile. Extendable refers to a shape by which a multiple of panels are connectable to each other, with or without an extension element. The profile may be curvilinear. Curvilinear profile refers to a profile having a non-planar surface. The profile may be e.g. a curvilinear panel. The invention also refers to a method for manufacturing the extendable curvilinear profile. An extended structure comprises a joint between a profile and another profile or an extension element. The joint may be disassembled. The invention also refers to a method for disassembling a joint of the extendable curvilinear profile.

### Background of the Invention

Coverings often comprise parts that have a curvilinear shape. The curvilinear shape may be visually attractive and resistant to wear, e.g. by guiding rainwater from the covering to ground simultaneously protecting an object beneath the covering. Curvilinear coverings may be made e.g. by bending a planar board. The planar board may have a uniform thickness. Sometimes coverings of large objects or large areas are needed. Large planar boards are hard to handle and bend to a curvilinear form. Moreover, large coverings are hard to transport, as a large covering requires a lot of space. Small coverings are easier to manufacture and transport.

### Summary of the Invention

An extendable profile is disclosed. The profile is relatively small in size. As the profile is extendable, a large area can be covered with multiple smaller extendable profiles. A joint made using the profile may be easily disassembled.

An embodiment of the invention comprises
- a first surface and a second surface, wherein the second surface is opposite to the first surface, the surfaces are connected by sides of the profile, and the sides of the profile and the surfaces of the profile meet at the edges of the profile,
- at least two layers, wherein the first layer comprises the first surface and the second layer comprises the second surface,
- thermoplastic material in between the layers, and
- at least a first groove in a first side of the profile, wherein
- the first groove is located such that at least one adhesive layer that comprises thermoplastic material ends at the first groove;
whereby a joint formed using the groove may be assembled or disassembled by melting the thermoplastic material.

The profile may be curvilinear for improved visual appearance, and for improved protective properties. In an embodiment
- the profile is curvilinear, whereby the surface normal of the first surface of the profile changes along a first edge of the profile,
- the first edge of the profile is comprised by a first side of the profile, and
- the first groove is arranged in the first side of the profile.

The profile may be part of a profile system, as disclosed in claims 9 to 11. A profile system comprises a profile and further comprises an extension element comprising a first tongue adapted or adaptable to the shape of the first groove of the profile; whereby the curvilinear profile is extendable using the first groove of the profile and the extension element.

When an extendable profile is attached to an extension element or to another extendable profile, a joint in between two objects is formed. A method is disclosed, by which the joint can be disassembled. An embodiment of the method comprises heating a first profile such that the thermoplastic material melts, whereby the height of the groove may be increased by pulling the profile from the extension element or the other profile, whereby the tongue may be removed from the groove.

A method for manufacturing an extendable profile is disclosed. An embodiment of the method comprises
- arranging available a panel comprising
   o a first surface and a second surface, the second surface being opposite to the first surface, the surfaces being connected by sides of the panel, wherein the sides of the panel and the surfaces of the panel meet at the edges of the panel,
   o at least two layers, wherein the first layer comprises the first surface and the second layer comprises the second surface, and
   o thermoplastic material in between the layers; and the method comprises,
- machining a first groove in at least one side of the panel or a profile made from the panel.

### Description of the Drawings

- Figure 1: shows, in a perspective view, an extendable curvilinear profile and support structures covered by the profile,
- Figure 2a: shows, in an end view, an extendable curvilinear profile,
- Figure 2b: shows, in the cross-sectional plane of IIb-IIb of Fig. 2a, a side view of an end of the extendable curvilinear profile of Fig. 2a,
- Figure 3a: shows, in a perspective view, a planar panel,
- Figure 3b: shows, in a perspective view, a planar panel having a groove,
- Figure 3c: shows, in an end view, form pressing the planar panel to a curvilinear profile,
- Figure 4a: shows, in an end view, the structure of a planar panel,
- Figure 4b: shows, in an end view, form pressing the panel of Fig. 4a to a curvilinear profile,
- Figure 5a: shows, in the cross sectional plane of Fig. 2b, an embodiment of the groove and the structure of the curvilinear profile,
- Figure 5b: shows, in the cross sectional plane of Fig. 2b, another embodiment of the groove and the structure of the curvilinear profile,
- Figure 5c: shows, in the cross sectional plane of Fig. 2b, another embodiment of the groove and the structure of the curvilinear profile,
- Figure 6a: shows, in the cross sectional plane of Fig. 2b, an embodiment of the groove in a first side of a profile, an embodiment of a corresponding tongue in a second side of the profile, and the structure of the profile,
- Figure 6b: shows, in the cross sectional plane of Fig. 2b, an embodiment of the groove in a first side of the profile, an embodiment of a second groove in a second side of the profile, and the structure of the curvilinear profile,
- Figure 7a: shows, in the cross sectional plane of Fig. 2b, an embodiment of an extension element arranged in between two profiles, the shape of the tongue of the extension element being adapted to the shape of the groove, whereby each profile forms a joint with the extension element,
- Figure 7b: shows, in the cross sectional plane of Fig. 2b, another embodiment of an extension element arranged in between two profiles, whereby each profile forms a joint with the extension element,
- Figure 7c: shows, in the cross sectional plane of Fig. 2b, another embodiment of an extension element arranged in between two profiles, whereby each profile forms a joint with the extension element,
- Figure 7d: shows, in the cross sectional plane of Fig. 2b, another embodiment of an extension element arranged in between two profiles, whereby each profile forms a joint with the extension element,
- Figure 7e: shows, in the cross sectional plane of Fig. 2b, another embodiment of an extension element arranged in between two profiles, whereby each profile forms a joint with the extension element,
- Figure 7f: shows, in the cross sectional plane of Fig. 2b, another embodiment of an extension element arranged in between two profiles, wherein the shape of the extension element before applying adhesive is adaptable to the shape of the groove, the adhesive forms part of tongues of the extension element in the joint, and the shape of the tongues in the joint are adapted to the shapes of the grooves,
- Figure 7g: shows, as seen from top, two profiles, connected with an extension element, whereby each profile forms a joint with the extension element,
- Figure 8a: shows, in the cross sectional plane of Fig. 2b, heating of a profile connected to an extension element,
- Figure 8b: shows, in the cross sectional plane of Fig. 2b, disassembling the joint of Fig. 8a between the profile and the extension element,
- Figure 8c: shows, in the cross sectional plane of Fig. 2b, reassembling the profile of Fig. 8b,
- Figure 9a: shows, in the cross sectional plane of Fig. 2b, heating of a profile to be connected,
- Figure 9b: shows, in the cross sectional plane of Fig. 2b, connecting the heated profile to an extension element to form an open joint,
- Figure 9c: shows, in the cross sectional plane of Fig. 2b, closing the open joint of Fig. 9b,
- Figure 9d: shows, in the cross sectional plane of Fig. 2b, heating of another profile to be connected to the extension element of Figs. 9b and 9c,
- Figure 9e: shows, in the cross sectional plane of Fig. 2b, connecting the another heated profile to the extension element to form another open joint,
- Figure 9f: shows, in the cross sectional plane of Fig. 2b, closing the another open joint of Fig. 9d,
- Figure 10a: shows, in an end view, as seen from the first side of a profile towards the second side of the profile, a first side of a curvilinear profile,
- Figure 10b: shows, in a side view, an extension element adapted to the curvilinear profiles of Figs. 10a and 10c,
- Figure 10c: shows, in an end view, as seen from the second side of a profile towards the first side of the profile, a second side of a curvilinear profile,
- Figure 10d: shows, in an end view, as seen from the first side of a profile towards the second side of the profile (cf. Fig. 10a), the first side and the second side of the curvilinear profile of Figs. 10a and 10c,
- Figures 11a-11h: show, in end views, some curvilinear profiles,
- Figure 11i: shows, in an end view, two curvilinear profiles opening towards each other,
- Figure 11j: shows, in an end view, three curvilinear profiles opening towards each other,
- Figure 12a1: shows, in an end view, an extendable curvilinear profile that has a shape of an almost closed tube,

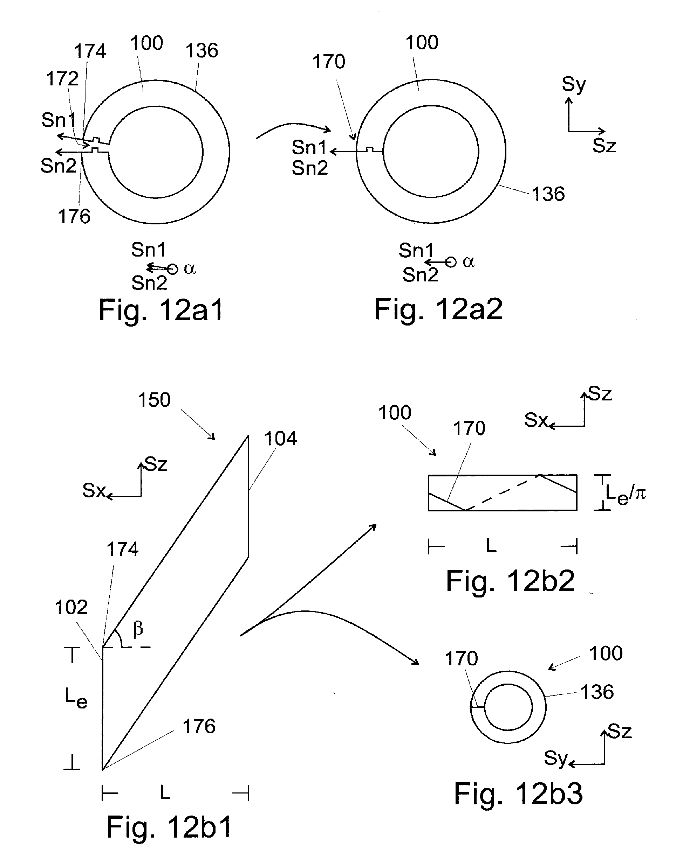

- Figure 12a2: shows, in an end view, the extendable curvilinear profile of Fig. 12a1 that has been closed to form a closed tube,
- Figure 12b1: shows a panel in a top view,
- Figure 12b2: shows the panel of Fig. 12b1 in a top view, wherein the panel has been rolled to form a tube, the tube comprising a joint, and the tube being a profile,
- Figure 12b3: shows the panel of Fig. 12b1 in an end view, wherein the panel has been rolled to form a tube, the tube comprising a joint, and tube being a profile,

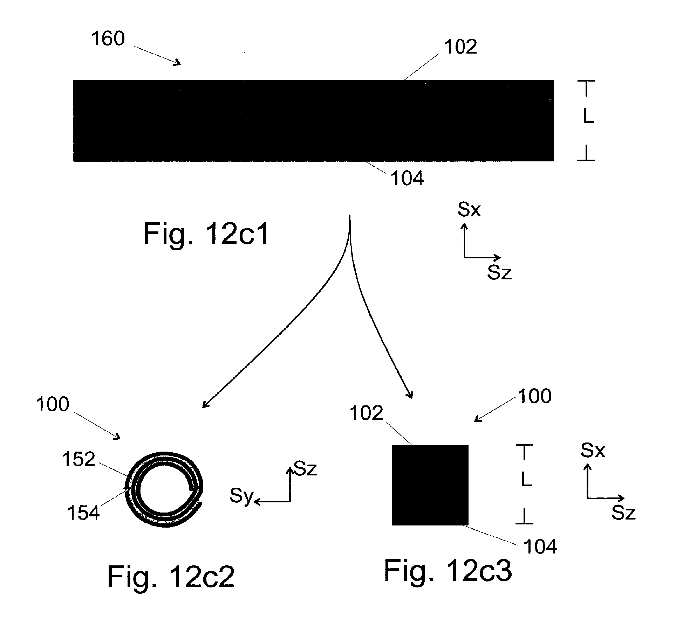

- Figure 12c1: shows a film in a top view, the film comprising possibly only one layer,
- Figure 12c2: shows a profile in an end view, wherein the profile has the form of a tube, and the profile has been made from the film of Fig. 12c1 by rolling, and
- Figure 12c3: shows a profile in a top view, wherein the profile has the form of a tube, and the profile has been made from the film of Fig. 12c1 by rolling.

### Detailed Description of the Invention

An extendable profile is disclosed. A joint made using the profile may be easily disassembled. The profile is relatively small in size. As the profile is extendable, a large area can be covered with multiple smaller extendable profiles. The profile may be curvilinear. A curvilinear profile is resistant to wear, e.g. by guiding rainwater from the covering to ground simultaneously protecting an object beneath the covering. Furthermore, such a curvilinear profile the profile may be visually attractive.

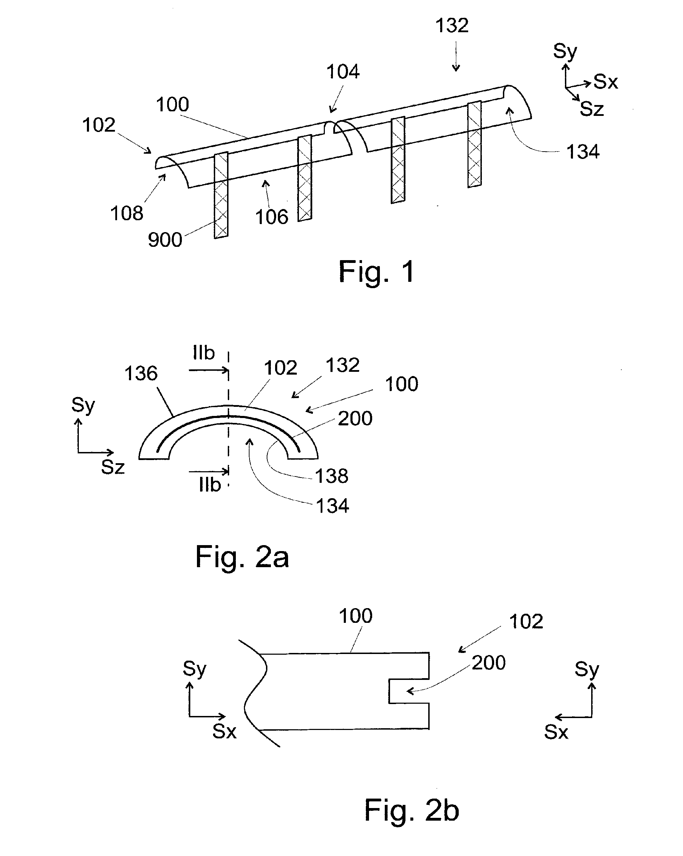

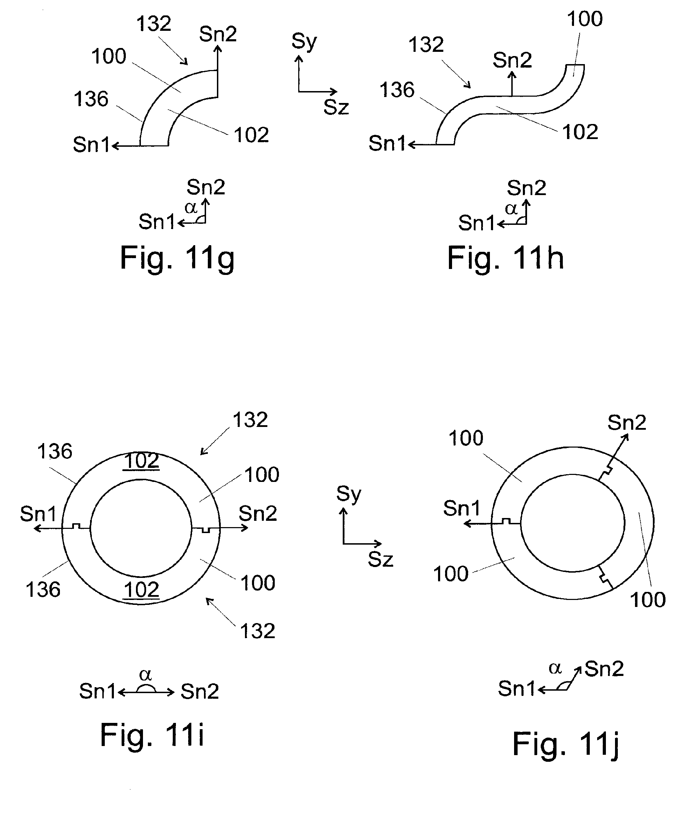

For example, Fig. 1 shows an extendable profile 100 in a perspective view. The profile 100 of Fig. 1 is curvilinear. The profile 100 covers the support structures 900. One extendable curvilinear profile 100 covers two support structures 900, and two extendable curvilinear profiles 100 cover four support structures 900. Thereby the extended profile comprising the two extendable curvilinear profiles cover the support structures at a large area. The extendable profile 100 may e.g. form a part of a handrail (as shown in Fig. 1a, whereby the curvilinear profile may open downwards), a railing, a chute (whereby the curvilinear profile may open upwards), or a pipe (e.g. by connecting at least two profiles opening towards each other, Figs. 11i and 11j, or as such, as shown in Figs. 12a2, 12b3 and 12c2).

The extendable profile 100 comprises a first surface 132 and a second surface 134. The first or the second surface may be used e.g. to protect the object under the profile. The extendable profile 100 further comprises a first side 102 and a second side 104. The first side 102 has a common edge with the first surface 132 and the second surface 134. The second side 104 has a common edge with the first surface 132 and the second surface 134. Moreover, the second side 104 is opposite to the first side 102, i.e. the first side 102 and the second side 104 do not comprise a common point. The profile is extendable by
- attaching the second side 104 of a first profile 100 to a first side 102 of a second profile 100 or
- attaching the second side 104 of a first profile 100 to an extension element 250, and attaching the first side 102 of a second profile 100 to the same extension element.

Any one of many profiles may be the first profile any other profile may be the second profile. In addition, the same profile may serve as the first and the second profile.

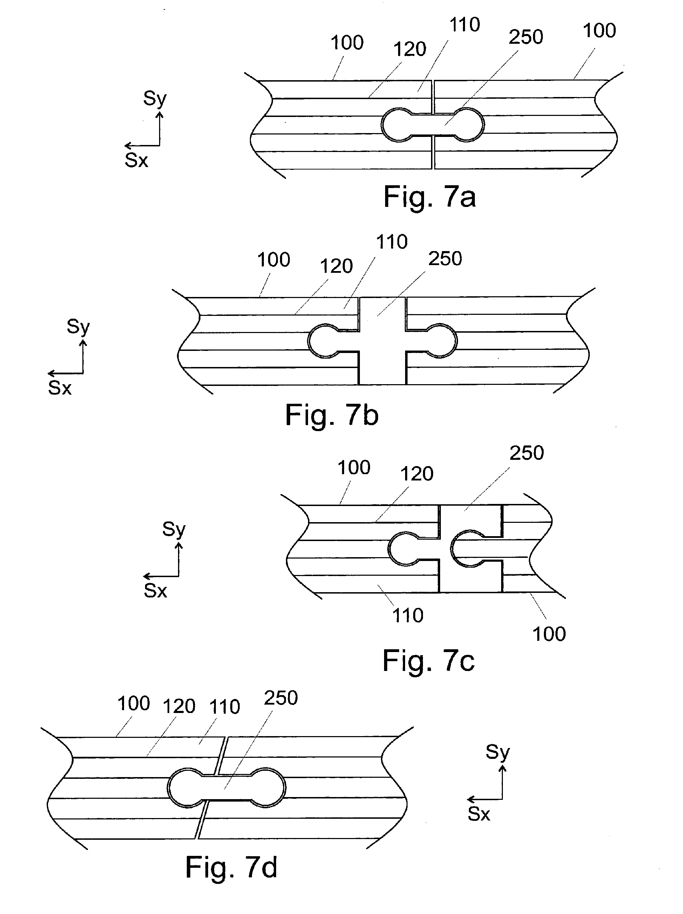

Fig. 1 shows also the coordinates Sx, Sy, and Sz used in the figures and the description. The first side 102 may have a surface normal in the -Sx direction and the second side 104 may have a surface normal in the Sx direction. However, referring to Fig 7d, the surface normal of these sides is not necessarily oriented in the Sx (i.e. +Sx) or -Sx direction. As shown in the figure 1 the profile is extendable in both the ±Sx directions.

Referring to Fig 1, the profile 100 may comprise also two other sides 106 and 108. The side 106 is opposite to the side 108. The other sides 106 and 108 may be essentially perpendicular to the first side 102 and to the second side 104. However, referring to Figs. 12a2, 12b3 and 12c2, the profile 100 does not necessarily comprise the other sides 106 and 108.

The profile 100 comprises the first surface 132 and the second surface 134, wherein the second surface 134 is opposite to the first surface 132, and the surfaces 132, 134 are connected by the sides 102 and 104 of the profile. The sides 102 and 104 of the profile and the surfaces 132, 134 of the profile meet at the edges of the profile. Two edges 136 and 138 are shown with a reference number in Fig. 2a.

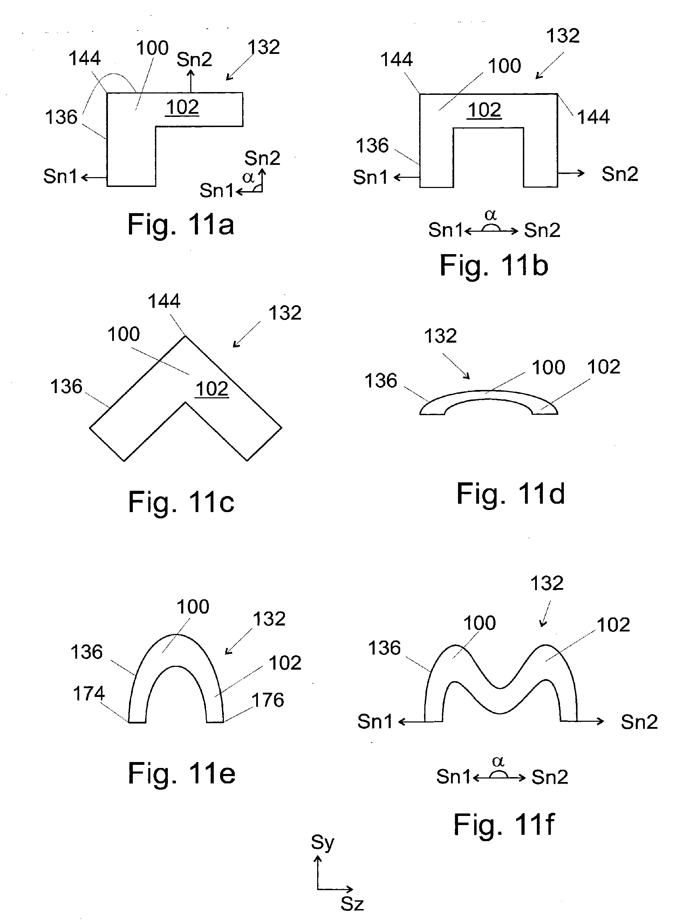

Referring to Figs. 2a and 2b, the profile 100 comprises at least a first groove 200. The first groove is located in the first side 102 of the profile 100. The profile 100 of Fig. 2a is curvilinear. The term curvilinear is defined in this context to mean that the profile 100 comprises a surface (e.g. the first surface 132) of which surface normal is not constant. As the surface normal is not constant, the surface is at least partly convex or concave. In particular, the surface normal of a surface changes along an edge of the profile. Referring to Fig. 2a, the surface normal of the first surface 132 changes along the edge 136. In addition, the surface normal of the first and the second surface changes along the edges 136 and 138. Therefore, the edge along which the surface normal of the surface changes, defines a side of the profile. In Fig. 2a, this side is the first side 102. The first groove is arranged in this side of the profile. Preferably the surface normal of a surface may change a lot, e.g. to guide significant amounts of liquid in a controlled manner. In an embodiment the first surface 132 comprises a first location having a first surface normal and a second location having a second surface normal. In the embodiment, the angle between the first surface normal and the second surface normal is 180 degrees (e.g. Figs. 11b, 11d, 11e, and 11i). Preferably the first surface comprises two locations such that the angle between the first surface normal and the second surface normal is at least 10 degrees, even more preferably the angle is at least 30 degrees, and even more preferably the angel is at least 100 degrees. Referring to Figs. 11a, 11c, 11g, and 11h, the angle may be 90 degrees. Referring to Fig. 11j, the angle may be 60 degrees. Referring to Figs. 12a1-12c3, the angle may change 360 degrees along the edge 136, whereby the extendable profile may be a closed tube. Referring to Figs. 12a1 and 12a2 the extendable profile of Fig. 12a1 may be extended with itself to form a closed tube of Fig. 12a2. The closed tube is not necessarily extendable.

A curvilinear extendable profile comprises the first surface 132, which is at least partly convex or concave, and the second surface 134, which is at least partly concave or convex, respectively. Therefore a structure, such as the supports 900, is coverable by the at least partly convex surface 132, and the profile 100 is extendable using the first groove 200. An extendable profile 100 may also be planar. The surface normal of a surface 132 of a planar extendable profile 100 is constant.

Figure 2b shows a cross section of a first groove 200. The cross section is taken along the line Ilb-Ilb of Fig. 2a. Referring to Fig. 1, it is noted that the profile 100 may be straight in the ±Sx direction, as shown in Figs. 1 and 2b. Such a profile may be e.g. form pressed from a planar panel. It is further noted that along some other edges, e.g. edges that are comprised by the sides 106 and 108 and by a surface 132, 134, the surface normal of the surface 132, 134 does not necessarily change. These edges may be parallel to the ±Sx direction. These edges are parallel to the ±Sx direction in Figs. 1, 2a, and 2b, wherein the profile 100 is straight in this direction.

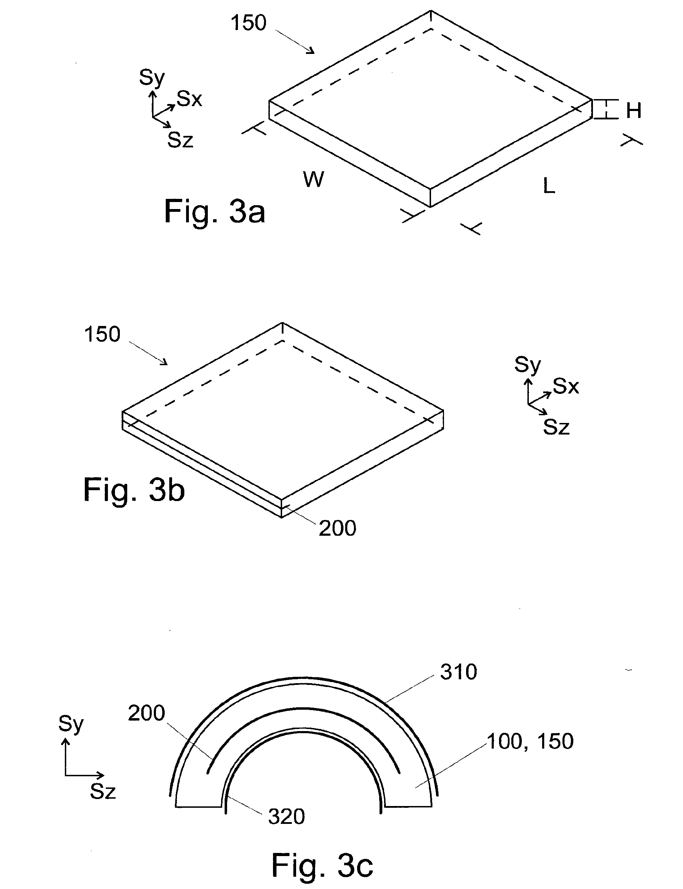

Referring to Figs. 3a-3c, the profile 100 may be made by form pressing a panel 150. Figure 3a shows an example of a panel 150. The panel 150 has a thickness H, length L and width W. The thickness H of the panel 150 is preferably at most 100 mm to facilitate form pressing on the panel 100. More preferably the thickness is at most 50 mm, and even more preferably the thickness is at most 20 mm.

The length L of the panel 150 may be more than the thickness H of the panel. In an embodiment the length L is at least five times the thickness H. In an embodiment the length L is at least ten times the thickness H. The width W of the panel 150 may more than the thickness H of the panel. In an embodiment the width W is at least five times the thickness H. In an embodiment the width W is at least ten times the thickness H. Referring to Figs 3b, 2a, and 1, the structure is extendable in the direction of panel length L. However, referring to Figs.11i and 11j, the structure may be extendable also in the direction of the panel width W.

The panel 150 may be planar or essentially planar. Preferably the panel 150 is at least essentially planar, since machining a planar panel is more efficient than machining a curvilinear profile. A panel having a radius of curvature more than 5 m is essentially planar. An alternative definition for an essentially planar panel is that a planar panel has a flatness of less than ±10 mm/m. The panel 150 comprises a first surface and a second surface. The second surface is opposite to the first surface. In addition, the second surface may be parallel or essentially parallel to the first surface. As for the names, the "surface" of the panel refers to the side of the panel having the area W×L. These surfaces are connected by sides of the panel 150. As for the names, the "side" of the panel refers to the side of the panel having the area WxH or LxH. The sides of the panel 150 and the surfaces of the panel 150 meet at the edges of the panel; whereby an edge has the length H, L, or W.

As will become clear the surfaces of the panel 150 may form the surfaces 132 and 134 of the extendable profile 100. Moreover the sides of the panel 150, having the area W×H, may form the first and second sides 102 and 104 of the extendable profile 100. Still further, the sides of the panel 150, having the area L×H, may form the other sides 106 and 108 of the extendable profile 100. However, the other sides may be attached to each other, whereby the extendable profile does not comprise these other sides and the extendable profile 100 is also curvilinear (Figs. 12a2 and 12b3).

To facilitate from pressing, the panel has a layered structure, as will be discussed in detail later. Therefore the panel 150 comprises at least two layers, wherein the first layer comprises the first surface and the second layer comprises the second surface; and adhesive in between the layers.

As will be discussed later, the layered structure in combination with thermoplastic adhesive, in addition or alternatively to form pressing, enables assembling and disassembling of a joint.

Thus a method for manufacturing the profile comprises arranging available a panel comprising
- a first surface and a second surface, the second surface being opposite to the first surface, the surfaces being connected by sides of the panel, wherein the sides of the panel and the surfaces of the panel meet at the edges of the panel,
- at least two layers, wherein the first layer comprises the first surface and the second layer comprises the second surface,
- and adhesive in between the layers, wherein the adhesive may be thermoplastic adhesive.

It is noted that the reference signs are not given for the surfaces and sides of the panel 150. However, it is evident for a person skilled in the art, how the surfaces and sides of the panel 150 are related to the surface 132, 134 and sides 102, 104 of the profile 100.

A groove 200 is machined to a side of the panel 150, as shown in 3b. The groove may be machined by methods known as such, e.g. sawing, cutting, or milling. Preferably the groove 200 is machined to an at least essentially planar panel 150. Machining planar objects is much easier than machining curvilinear objects. Thus a method for manufacturing the profile may further comprise
- machining a first groove 200 in at least one side of the panel 150. Referring to Fig. 3c, the panel 150 may be form pressed to a curvilinear profile 100. The groove 200 may be machined before form pressing or after form pressing. However, as discussed, preferably the groove is machined before form pressing. Thus a method for manufacturing the profile 100 may comprise
   - form pressing the panel 150 to a curvilinear profile 100, and
   - machining a first groove 200 in at least one side of the panel 150 before form pressing.

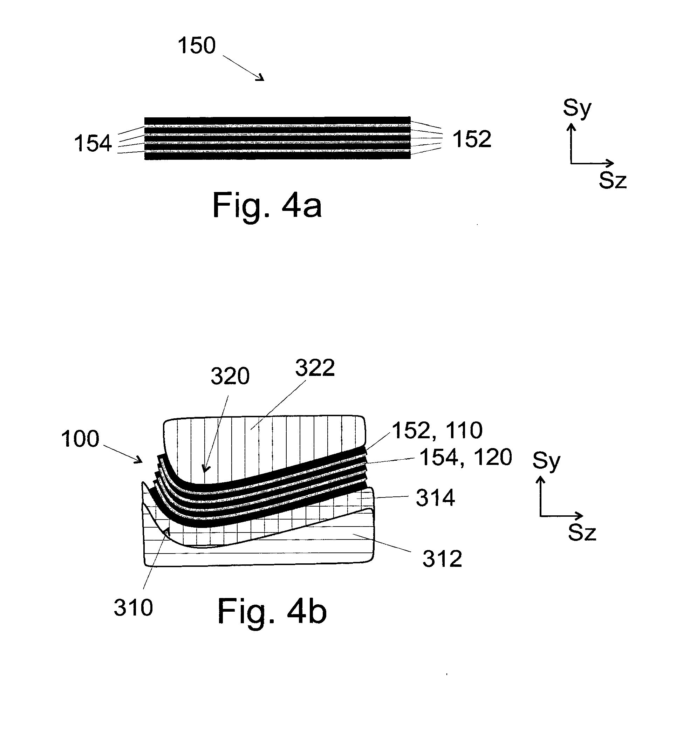

In form pressing, the panel 150 is pressed between a first surface 310 and a second surface 320 to a curvilinear shape. The surface 310 may be a surface of a body 312 (Fig. 4b); a surface of a deformable vessel, e.g. a fluid-proof bag; or a surface of an object located in between the vessel and the panel. The surface 320 may be a surface of a body 322 (Fig. 4b); a surface of a deformable vessel, e.g. a fluid-proof bag; or a surface of an object located in between the vessel and the panel. More details of form pressing will be given below.

The panel may be form pressed such that the groove becomes located in a curvilinear side of the profile 100. Thus a method for manufacturing the profile 100 may further comprise
- form pressing the panel 150 to a curvilinear profile 100 such that the first groove 200 is located in a first side 102 of the profile 100, wherein the first side 102 of the profile 100 comprises a first edge 136 of the profile 100, and the surface normal of a first surface 132 of the profile 100 changes along the first edge 136 of the profile 100. It is noted that the first surface 132 comprises the first edge 136. Furthermore it is noted that the first surface 132 is different from the first side 102, i.e. the first surface 132 does not comprise the first side 102.

Referring to Fig. 4a the panel 150 comprises at least two layers 152, wherein the first layer comprises the first surface of the panel and the second layer comprises the second surface of the panel. In between the layers 152, thermoplastic material 154 is arranged.

It has been noticed that planar layers that are relatively thin may be bendable even if a thick planar objects of the same material a not bendable, e.g. break under bending, or require excessive force to bend. According to an aspect of the invention, the profile 100 comprises layers 110 of material. The profile 100 may be made from a panel 150 as discussed above. To make a panel 150 from layers 152, the layers 152 of the panel 150 are attached to each other using adhesive 154.

To facilitate bending of the panel 150 the layers 152 are attached to each other using thermoplastic material 154. When the panel is heated, the thermoplastic material 154 melts, or at least partly loses its rigidity. After losing its rigidity, the panel can be form pressed (or otherwise bended) to required shape, since the melted thermoplastic allows the thin layers 152 of the panel to slide relative to each other enabling bending of the panel.

It is known that the flexural stiffness of an object in general depends on the thickness as H³, wherein H is the thickness. Thus, the flexural stiffness of a panel 150 (Fig. 4a) is also proportional to H³, wherein H is the thickness of the panel 150. Thus, thick objects are stiff and hard to bend. The problem of stiff objects has been solved by using a panel 150, wherein the panel 150 comprises at least two, preferably multiple (say N) layers, each having the thickness of (H/N). Thus the flexural stiffness of the pile of layers is only N(H/N)³. This applies, when the layers can slide with respect to each other, i.e. when the material in between the layers allow sliding. The material in between the layers may comprise thermoplastic material. The thermoplastic material allows sliding e.g. when the temperature of the thermoplastic is above the melting point. Therefore, the layered panel 150 is much more flexible than a uniform board of a material, especially above the melting point of the thermoplastic material. The material of the layers 152 of the panel have a higher melting point or softening point than the thermoplastic material 154.

After cooling down the panel 150, the thermoplastic material 154 may harden, and the object re-gains its rigidity. Alternatively, some thermoplastic materials start to cross-link in elevated temperature, e.g. during form pressing, whereby the thermoplastic material may become at least partly cross-linked thermoset material during form pressing. In this case cooling is not required for the form pressed panel (i.e. profile 100) to gain its rigidity. At least partly thermoset resin (at least partly cross-linked resin) is an example of this kind of material. Moreover, only partly cross-linked resin is another example of this kind of material.

In the following the term "form pressing" refers to the process, wherein the panel 150 is pressed to a form in between two surfaces 310, 320. The term "panel" 150 refers to an object comprising at least two layers 152 of material (not necessarily the same material), wherein the layers are attached to each other using thermoplastic material 154.

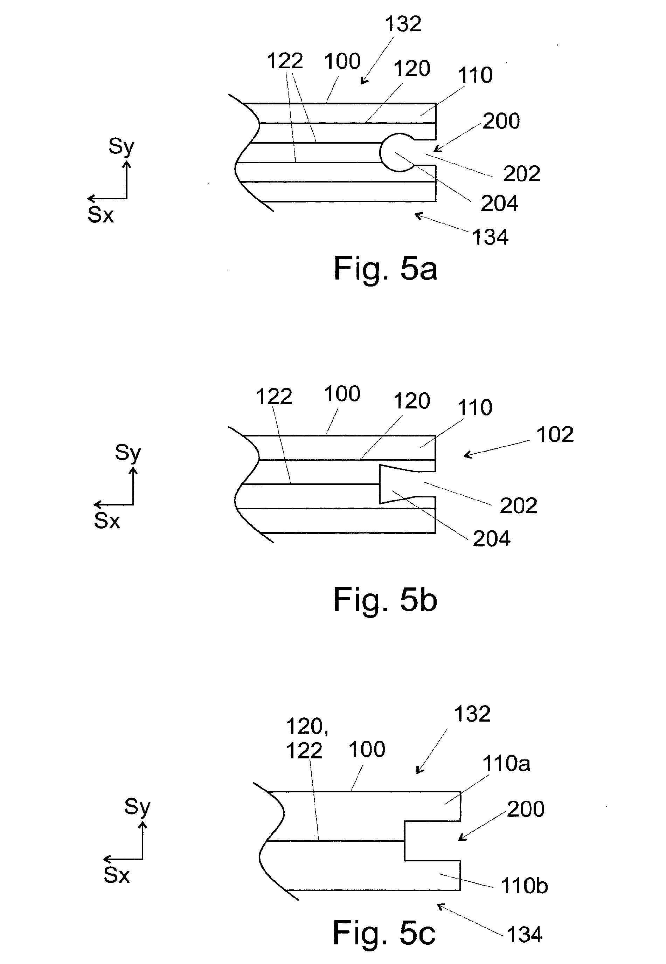

As the profile 100 is form pressed from a panel 150, the properties of the panel 150 are applicable to the properties of the profile 100. However, as discussed above, the thermoplastic material 154 in the panel 150 may at least partially cross-link during form pressing. Therefore, the material 120 (Fig. 5a) in between the layers 110 of the profile 100 is not necessarily thermoplastic.

The thermoplastic material 154 may comprise at least one of polyolefin, lignin, polyvinyl alcohol, polyethylene, polypropylene, polyester resin, phenol resin, epoxy resin, urea-formaldehyde resin, melamine resin, acrylics and polycarbonates. It is noted that e.g. polyethylene, polypropylene, and copolymers comprising ethylenes and propylenes are polyolefins. Some of these materials may be processed, e.g. in a high temperature, by cross-linking, to form at least partially thermoset material. However, in the panel 150, the material is in its thermoplastic form.

Materials that are in thermoplastic form before and after form pressing may include polyolefin, lignin, polyethylene, polypropylene and copolymers comprising ethylenes and propylenes. In an embodiment, the thermoplastic material is thermoplastic also after form pressing. These materials may be used as the thermoplastic material 154 of the panel 150 and as the (thermoplastic) adhesive 120 of the profile 100. Thermoplastic adhesive in the profile 100 is beneficial, since in that case, as will be discussed, a joint can be assembled and disassembled using heat.

Materials that are in thermoplastic form before form pressing, and in at least partly thermoset form after form pressing may include phenol resin, epoxy resin, polyester resin, urea-formaldehyde resin, and melamine resin. These materials may be used as the thermoplastic material 154 of the panel 150 and the (at least partly thermoset) adhesive 120 of the profile 100 for a joint that cannot be disassembled using heat, as will be discussed later.

Before form pressing the panel 150 is preferably rigid. The panel is rigid, if the thermoplastic material 154 is below its melting point. In some embodiments, the thermoplastic material 154 is substantially rigid in a first temperature, wherein the first temperature is from -20 °C to +50 °C, preferably from +15 °C to +35 °C, and more preferably near room temperature.

Figure 4b show the process of form pressing the panel 150 of Fig. 4a. The panel 150 is heated or has been heated to a second temperature, in which the thermoplastic material 154 is above the melting point. The second temperature is greater than the first temperature. The second temperature may be at least 10 °C greater than the first temper ature, preferably at least 20 °C greater than the first temperature, and more preferably at least 50 °C greater than the first temperature.

Materials that are in thermoplastic form before and after form pressing may have a melting point of e.g. from 80 °C to 300 °C.

Materials that are in thermoplastic form before form pressing, and in at least partly thermoset form after form pressing may have melting point from -10 °C to 60 °C (before form pressing). Above the melting point, e.g. above 70 °C, the cross-linking may start and accelerate, and the material may be transformed to an at least partly thermoset material.

The panel 150 (Fig. 4a) is form pressed to form the profile 100 (Figs. 1 and 4b). The form pressing may be performed in a device for form pressing. The device for form pressing comprises a first surface 310. Referring to Figs. 4b and 3c, the first surface 310 may be at least partially concave. The at least partially concave surface 310 may be arranged on a first body 312. The device further comprises a second surface 320. The second surface 320 may be at least partially convex. The second surface 320 may be arranged on a second body 322. The shape of the first surface may be adapted to the shape of the second surface. The panel 150 is form pressed in between two surfaces 310, 320, whereby the device for form pressing comprises means for pressing the first surface 310 against the second surface 320 with a force. The means may include a hydraulic press or a screw.

Referring to Fig. 4b, at least one of the first body 312 and the second body 322 of the device may comprise elastic material 314 on the first or the second surface. In Fig. 4b, the first body 312 comprises elastic material 314 on the concave surface 310. Both surfaces 310, 320 may be surfaces of an elastic material. The elastic material is arranged to deform during form pressing. Therefore, the shape of the surface is arranged to adapt to the shape of the panel or the profile.

When elastic material is used on a body to arrange a deformable surface 310, 320, the hardness of the elastic material is e.g. in the range from 20 ShA to 95 ShA. Preferably the hardness of the elastic material is in the range from 20 ShA to 80 ShA, and more preferably hardness of the elastic material is in the range from 20 ShA to 50 ShA. The unit ShA refers to the hardness on the Shore scale, type A. The Shore hardness is related to the Young's modulus of the material. Relationships of the form E=[0.0981(56+7.62336S)]/[0.137505(254-2.54S)] and log₁₀(E)=0.0235S-0.6403, wherein S is the Shore hardness and E is the Young's modulus (in MPa) have been proposed. Using these equation, the Shore (A) 20 corresponds to the Young's modulus of about 0.67 MPa to 0.73 MPa; the Shore (A) 50 corresponds to the Young's modulus of about 2.5 MPa to 3.5 MPa; the Shore (A) 80 corresponds to the Young's modulus of about 9.3 MPa to 17 MPa; and the Shore (A) 95 corresponds to the Young's modulus of about 39 MPa to 44 MPa.

The elastic material is arranged to deform while pressing the first body 312 against the second body 322 with the force. In this way, a surface of the device for form pressing may be adapted to the curvilinear shape of the profile 100.

Another embodiment of the device for form pressing comprises a flexible vessel such as a fluid-proof bag. The vessel may be filled with fluid such as air, steam, and/or water. The wall of the flexible vessel may form the surface 310 or the surface 320. Alternatively, an object may be inserted in between the vessel and the profile 100 or panel 150 that is to be form pressed. In this case, the object may comprise the surface 310 or the surface 320. The object may be e.g. a plate to protect the vessel. The plate may be a metal plate. The metal plate may be located in between a fluid-proof bag and the profile 100. In this way, at least one of the surfaces 310, 320 is arranged to deform while pressing the first surface 310 against the second surface 320 with the force. In this way, a surface 310, 320 of the device for form pressing may be adapted to the curvilinear shape of the profile 100. The pressure in the vessel may be e.g. from 0.5 bar to 10 bar above the ambient pressure. In an embodiment steam is used in the vessel, whereby the temperature of the steam defines the pressure of the vessel, at least when the steam is saturated steam. For example, the (absolute) pressure of saturated steam at 148 °C is 4.5 bar; the (absolute) pressure of saturated steam at 162 °C is 6.5 bar; the (absolute) pressure of saturated steam at 173°C is 8.5 bar; the (absolute) pressure of saturated steam at 184 °C is 11 bar. The absolute pressure of 11 bar correspond to the limit 10 bar above the ambient, discussed above. The vessel may thus be used as a heating element, arranged to heat a preform or an intermediate product. E.g. a hot fluid, such as steam, may be arranged to flow through the vessel or circulate in the vessel. Moreover, the vessel may - in addition or alternatively - be used as a cooling element, arranged to cool a preform or an intermediate product. E.g. a cold fluid, such as air or water, may be arranged to flow through the vessel or circulate in the vessel.

The force, which is used to press the first surface against the other surface, may be selected to be so large that the panel 150 deforms. However, it is also possible to reduce the required force using low pressure. For example on one of the surfaces low pressure nozzles may be arranged. These low pressure nozzles may be arranged to generate suction, by which the panel 150 is pulled in contact with the surface. Using this suction, the panel 150 deforms (to the profile). The other surface may be pressed against the first surface with a relatively low force. The other surface may be e.g. a surface of a flexible vessel. The low pressure is less than the ambient. For example, the low pressure may be at least 0.25 bar below the ambient. If the ambient pressure is e.g. about 1 bara (the unit bara referring to absolute pressure), the low pressure may be e.g. from 0 bara to 0.75 bara.

The panel 150 is form pressed at the second temperature.

In case the panel 150 comprises thermoplastic materials that is in thermoplastic form before and after form pressing, the panel 150 may be at a second temperature that is relatively high. The panel 150 may have the second temperature before form pressing, or the temperature may be increased during form pressing. The relatively high temperature refers to a temperature above the melting point of the thermoplastic material 154. The relatively high temperature may be e.g. 80 °C, 100 °C, 110 °C, 120 °C, 130 °C, 140 °C, 160 °C, 200 °C, 250 °C, or 300 °C. In an embodiment, the high temperature is from 110 °C to 140 °C. In this way, the thermoplastic material is not rigid before and/or during from pressing. During form pressing, the profile may be cooled down to a temperature below the melting point of the thermoplastic material. In this way, the thermoplastic material 154 is rigid after form pressing. Thereby the profile 100, which is the form pressed panel 150, is also rigid. The temperature at the end of form pressing may be e.g. at least 10 °C, preferably at least 20 °C and more pre ferably at least 50 °C lower than the second temperature. The temperature at the end of form pressing may equal the first temperature.

The device for form pressing may be arranged to cool the panel 150 or the profile 100 while pressing the first surface 310 against the second surface 320. During form pressing, the panel 150 or the profile 100 is located in between the first surface 310 and the second surface 320. The device may further comprise a cooling element arranged to remove heat from the curvilinear panel 105 or the profile 100 or the device for form pressing such that the panel or the profile is cooled with said removal of heat. The device for form pressing may be arranged to first heat the panel 150, e.g. above a melting point of thermoplastic material 154, and thereafter to cool down at least one of a curvilinear panel 150 and a profile 100.

In form pressing or before form pressing the panel 150 may be in a second temperature, which is an intermediate temperature, in case the panel 150 comprises thermoplastic material 154 that is in thermoplastic form before form pressing, but in at least partly thermoset form after form pressing. The intermediate temperature refers to a temperature above the melting point of the thermoplastic material. In this way, the thermoplastic material is not rigid before from pressing. The intermediate temperature may be e.g. 40 °C, 50 °C, 60 °C, or 70 °C. During form pressing, the product may be further heated to start the cross-linking process of the thermoplastic material. In this way, the thermoplastic material transforms to at least partly thermoset material, which is rigid after form pressing. Thus a rigid profile 100 is formed, wherein the adhesive 120 between the layers 110 of the panel 100 (Fig. 5a) comprises at least partly thermoset material.

The device for form pressing may be arranged to heat a panel 150 while pressing the first surface 310 against the second surface with the force, wherein the panel 150 (or profile 100) is located in between the surfaces 310, 320. The device for form pressing may comprise a heating element arranged to generate heat such that the panel 150 is heated with said heat. The device for form pressing may comprise a heating element arranged to heat at least one of the first surface 310, first body 132, the second surface 320, the second body 322, the elastic material 314, the panel 150, and the profile 100.

The device for form pressing may be arranged to first heat the panel 150, e.g. to start the cross-linking of the thermoplastic material 154, and thereafter to cool down the profile 100. As the material in between the layers 110 is at least partly thermoset, the profile 100 needs not to be cooled during form pressing. It is also possible to first form press the panel 150 such that the thermoplastic material 154 transforms to at least partly thermoset material in the second temperature. The resulting curvilinear profile 100 is rigid, since the material 120 in between the layers 110 is at least partly thermoset.

The panel 150 can be heated to the second temperature prior to form pressing or at the same time during form pressing. The melted thermoplastic material 154 allows for sliding of the layers 152 and in this way the bending stiffness of the panel 150 is reduced.

Referring still to Figs. 4a and 4b, in an embodiment the (planar) panel 150 is pressed in between two bodies 312 and 322 to produce a curvilinear profile 100. The shape of the tools (i.e. bodies 312, 322) determine the shape of the profile 100. When the profile is cooled below the melting point of the thermoplastic material or the thermoplastic material is cross-linked to thermoset material, the preform re-gains its stiffness.

The thermoplastic materials 154 of the panel 150 were discussed above. After form pressing, the material is referred to as the adhesive 120 of the profile 100 (Fig. 5a). The adhesive 120 may be thermoplastic or at least partly thermoset.

As the panel 150 comprises layers 152, the profile 100 comprises layers 110. The materials for the layers 110 of the profile 100 will be discussed below. It is noted that these features may apply also for the layers 152 of the panel 150. However, some properties (such as the degree of cross-linking, transparency, stiffness) of the layer 152 may change during form pressing. Referring to Fig. 5c, the profile comprises a first layer 110a that comprises the first surface 132 and a second layer 110b that comprises the second surface 134. This applies also to the embodiments shown in Figs. 5, 6, 7, 8, and 9.

At least one layer 152 of the panel 150 or layer 110 of the profile 100 may comprise at least one of glass, metal, fiberglass, carbon fibers, natural fibres, and polymer material.

The properties, e.g. the opaqueness or the flexibility of the layers 110 may be selected according to the preferred use. For example, if a transparent profile 100 is required, the layers 110 may transparent, e.g. polymer or glass. Transparent polymers include e.g. some acrylates and carbonates. For example, a safety glass, when properly bent (e.g. form pressed) may appear much thinner as it truly is. Therefore, a safety glass is one potential application of the invention.

Moreover, if strength, light weight an recyclability are required, the layers 110 may comprise natural fibers, e.g. in the form of wood or paper. All the layers 110 are not necessarily of the same material. At least one layer 110 may comprise at least one of natural fibers, glass, and polymer material.

In a preferred embodiment, at least one layer 110 of the preform 100 comprises organic natural fibers. In a preferred embodiment, at least one layer 110 of the profile 100 comprises wood. Such a profile may be strong, light, and at least partly recyclable or burnable. The thickness of the layer that comprises wood may be from 0.2 mm to 5 mm. Layers of other materials may have different thickness. Some brittle materials, e.g. glass, are flexible if they are thin. For example some glasses become flexible at the thickness of around 100 µm. In general, the thickness of a layer may be from 10 µm to 5 mm.

The layer 110 that comprises wood may have been manufactured by one of rotary cutting, flat slicing, quarter slicing, half-round slicing, and rift cutting. These methods are known as such in plywood manufacturing, and different methods result in a slightly different visual appearance of the layer. Rotary cutting may also be referred to as turning. In an embodiment, the layer that comprises wood has been manufactured by rotary cutting. The layers of plywood may be referred to as veneers. A layer 110 comprising fibrous material may have a fiber orientation in the plane 110 comprising the fibrous material. In this way, the layer is easily flexible in at least one direction, e.g. the direction perpendicular to the fiber orientation, whereby the fiber orientation is parallel to the bending axis. This is particularly true for a layer 110 comprising wood, e.g. a wooden veneer.

In an embodiment, the profile 100 comprises plywood. In an embodiment, the profile 100 comprises plywood that comprises thermoplastic adhesive 120. In an embodiment, the plywood comprises at least three layers 110 that comprise wood. In an embodiment, the profile is a curvilinear plywood board. The profile 100 may comprise also 3D veneers.

A 3D veneer comprises a wooden layer and a support layer. A traditional veneer is flexible in one orientation, in an orientation perpendicular to the fiber orientation. In a 3D veneer, the wooden layer is attached to a flexible support layer, and the veneer is bent in an orientation parallel to the fiber orientation, thereby breaking the fibers. The bending may be done using a roll with a relatively small diameter. The rotational axis of the roll is arranged perpendicularly to the fiber orientation of the veneer. After breaking the fibers in this way, the 3D veneer is flexible both parallel and perpendicular to the fiber orientation.

The number of layers 110 in the profile 100 is preferably at least three. In this context, the adhesive 120 in between the layers is not considered a layer 110. More preferably, the number of layers 110 may be e.g. at least 5, at least 7, at least 9, at least 11, at least 13, at least 15, or at least 17. In case the layers comprise anisotropic material, such as wood, paper, fiberglass or other fibrous material, the number of layers is preferably odd (i.e. 2N+1, wherein N is an integer). Moreover, the mutual orientation of adjacent layers is in this case is preferably 90 degrees rotated, wherein the orientation of the layer is characterized by the material properties. For example, in plywood the anisotropic layers (veneers) comprising wood are such oriented, and the number of layers is typically odd. The number of layers may be even, e.g. when layers 110 of the preform 100 comprises, alternatively or in addition to wood, other material or materials. E.g. in a fibrous material the orientation of the layer is characterized by the orientation of the fibers. Thus the fiber orientation of a layer may be essentially perpendicular to the fiber orientation of an adjacent layer.

Preferably many of the layers 110 comprise wood. The profile 100 may comprise layers 110 that comprise wood and layers that do not comprise wood. The number of layers 110 that comprise wood may be more than 50 % (half) of the number of the layers 110 of the preform 110. In this aspect, the adhesive layers 120 are not considered layers 110. Preferably the number of layers 110 that comprise wood is more than 70 %, and more preferably more than 90 % of the number of the layers 110 of the preform 110.

Figures 5a-5c describe embodiments of the invention. In particular Figures 5a-5c describe profiles 100 with different number of layers 110 and with different shapes of the groove 200. It is evident the shape of the groove 200 and the number of layers (in addition to the material selections discussed above) may be made independently.

Figure 5a shows cross-sectional view of a part of a profile 100, in particular near the first side 102. The cross sectional view is the same view as in Fig. 2b, however, the structure of the profile 100 and the groove 200 is different. For the directions, the directions Sx and Sy are indicated (cf. also Fig. 1).

Figure 5a shows the parts of the layers 110 and the thermoplastic material 120, e.g. adhesive. As seen, the profile 100 of Fig. 5a comprises five layers 110. Moreover, the first side 102 and the surfaces 132 and 134 are shown. The reference number 122 denotes a detachable adhesive layer, as will be discussed in more detail later. The panel 100 comprises the first groove 200. The shape of the first groove 200 may be described as the groove 200 comprising two parts: an inlet part 202 and an inboard part 204. The height of the inlet part 202 is smaller the height of the inboard part 204. Thereby a tongue having a shape adapted to the shape of the groove 200 is locked into the groove 200. Means for arranging a tongue into the groove 200 will be discussed later. In Fig. 5a the cross section of the inboard part 204 of the groove is circular. It is evident that the groove extends along the first side 102 of the profile 100. However, the side may comprise many grooves, whereby the groove may be significantly narrower than the profile.

It is noted that in some embodiments, particularly in some curvilinear extendable profiles, the adhesive 120 is not necessarily thermoplastic. However, thermoplastic material enables disassembling the joint, as will be discussed.

Figure 5b shows cross-sectional view of a part of another profile 100. The profile 100 of Fig. 5b comprises four layers 110. The panel 100 comprises the first groove 200. The shape of the first groove 200 may be described as the groove 200 comprising two parts: an inlet part 202 and an inboard part 204. The height of the inlet part 202 is smaller the height of the inboard part 204. In Fig. 5a the cross section of the inboard part 204 of the groove is triangular. The height of the triangle is greater near the center of the profile 100 than near the surface 102.

Figure 5c shows cross-sectional view of a part of another profile 100. The profile 100 of Fig. 5c comprises two layers 110a and 110b. The panel 100 comprises the first groove 200. The cross section of the first groove 200 is rectangular. An edge of the rectangle is oriented parallel to a surface (132, 134) of the profile 100.

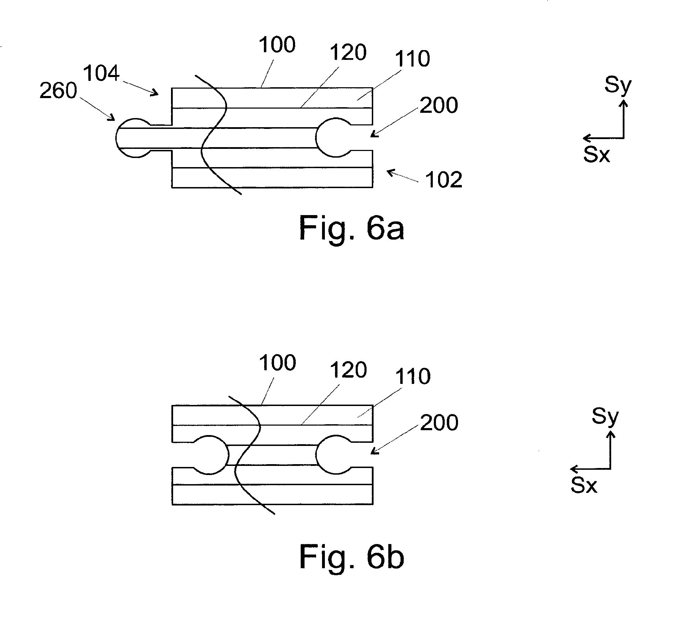

Figures 6a and 6b show embodiments of the profile 100. In particular, the shape of the profile 100 at a second side 104 (the second side being opposite to the first side 102) is shown. The shape is shown in the same cross sectional view as Figs. 5a-5c. However, also a part of the second side 104 is shown.

Figure 6a shows a profile comprising, on the first side 102, the first groove 200. On the second side 104 that is opposite to the first side 102, the profile comprises a tongue 260. The shape of the tongue 260 is adapted to the shape of the first groove 200. Therefore the profile 100 is extendable by arranging the tongue 260 of a second profile 100 to the first groove 200 of a first profile 100. It is noted that the arrangement of two curvilinear profiles may be alternatively be made by
- arranging available two panels 150,
- machining a tongue and a groove to both panels 150,
- joining two panels 150 using a groove of a first panel and a tongue of a second panel, and
- form pressing the arrangement of two panel to an arrangement of two curvilinear profiles 100.

The profile 100 is extendable also by arranging an extension element in between two profiles. It is noted that if the profile is curvilinear, the surface normal of the first surface of the profile changes also along a second edge of the profile. The second side 104 of the profile comprises the second edge. The tongue 260, is arranged on this second side 104.

Figure 6b shows a profile comprising, in the first side 102, the first groove 200. In the second side 104 that is opposite to the first side 102, the profile comprises a second groove. Therefore the profile 100 is extendable by using an extension element, as will be discussed. As for the shape of the second groove, the second groove of Fig. 6b comprises an inlet part and a inboard part. The height of the inlet part is smaller the height of the inboard part.

Thereby a tongue having a shape adapted to the shape of the second groove may be locked into the second groove.

Figures 7a to 7g show profile systems comprising two extendable profiles 100 and an extension element 250. The extension element 250 comprises a first tongue adapted to the first groove of the profile. Thereby a the extendable profile is extendable using the first groove of the profile, the tongue of the extension element, and another similar profile comprising a tongue or a second groove (whereby the extension element further comprises a groove or a second tongue, respectively).

Figure 7a shows two profiles 100 of Fig. 6b in the same cross sectional view as in Fig. 6b. The first profile 100 of the profile system of Fig. 7a comprises the first groove in the first side 102 and a second groove, wherein the second groove is located in the a second side 104 of the profile 100, and the second side 104 of the profile is located opposite to the first side 102 of the profile. The profile system further comprises a second profile 100, which is identical to the first profile 100.

The profiles are attached to each other using an extension element 250. The extension element comprises a first tongue adapted to the first groove of the first profile. The extension element of Fig. 7a further comprises a second tongue adapted to the second groove of the second profile. Thereby the curvilinear profile 100 is extendable using the first groove of the first profile, the second groove of the second profile, and the extension element.

In Fig. 7a the length of the extension element is selected such that when the extension element connects the two profiles of the profile system, the first side 102 of a first profile is in contact with the second side 104 of a second profile, wherein the first side 102 comprises the first groove 200 and the second side 104 comprises the second groove. Thereby two profiles of the profile system are connectable such that the extension element 250 of the joint is not visible when connecting the two profiles.

Figure 7b shows another profile system. In Fig. 7b, the length of the extension element 250 is larger than in Fig. 7a, whereby the extension element forms part of the surface of the extended profile system. The Extension element of Fig. 7b comprises two tongues. The surface of the extended profile system is preferably continuous. This applies also to the system of Fig. 7a.

Figure 7c shows another profile system. In Fig. 7c, the extension element comprises a tongue and a groove. The tongue is adapted to the first groove of the first profile 100 (on left). The groove of the extension element is adapted to the tongue of the second profile 100 (on right).

Figure 7d shows another profile system. The first side of the profile is sloping, whereby the surface normal of the first side 102 of the profile 100 is not parallel to extension direction (i.e. ±Sx).

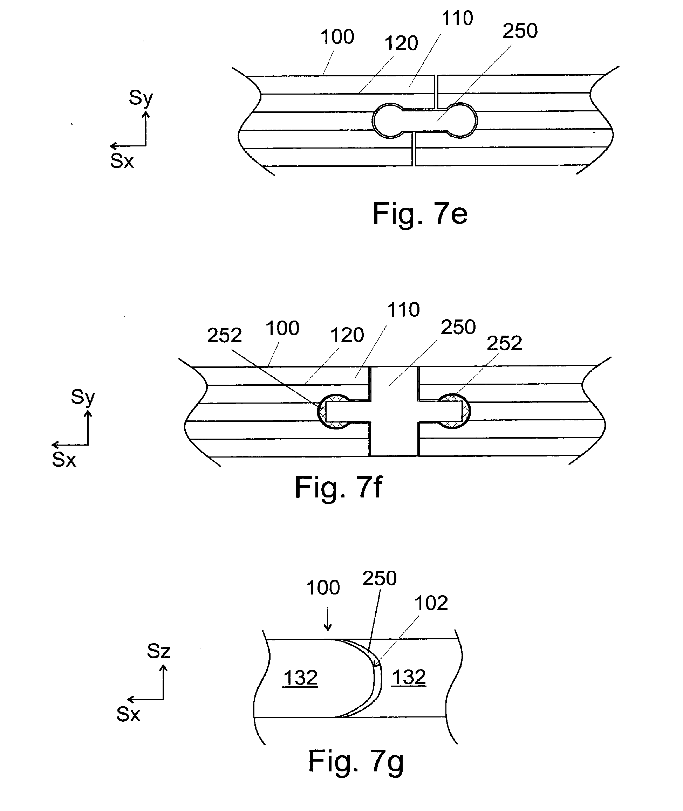

Figure 7e shows another profile system. The first side of the profile is not planar. Thereby the depth of the first groove 200 is greater on a first side of the groove than on the other side of the groove. Referring to Fig. 7e, the groove is deeper on the upper side of the groove than on the lower side of the groove.

Figure 7f shows another profile system. The tongue of the extension element 250 comprises adhesive 252. As shown in the figure, the shape of the tongue of the extension element has been adapted to the shape of the groove of the profile with the adhesive 250. The shape of the rest of the tongue is not necessarily adapted to the shape of the groove, but may be adaptable to the shape of the groove. The adhesive can be applied onto the rest of the tongue by:
- arranging adhesive 252, e.g. in viscous or liquid form, into a groove of the profile 100,
- inserting a tongue of another profile 100 or an extension element 250 into the groove, and
- solidifying the adhesive 252 e.g. by hardening or cooling.

The adhesive 252 may be thermoplastic adhesive. By solidifying the adhesive, the tongue of the profile or the extension element, which now is located in the groove, can be locked into the groove. More precisely, after hardening the adhesive 252, the height of the tongue is greater than the height of the inlet part 202 of the groove, whereby the tongue is locked into the groove. However, before solidifying the adhesive 252, the height of the tongue may be smaller than the height of the inlet part 202 of the groove, as shown in Fig. 7f, whereby the tongue is easily inserted into the groove.

In this way the shape of the tongue of the profile or the extension element, the shape referring to the shape before applying the adhesive, is adaptable to the shape of the groove. In addition, in this way the shape of the tongue in the joint, the shape referring to the shape after solidifying the adhesive, is adapted to the shape of the groove.

In addition or alternatively, the adhesive 252 may be part of the extension element 250 before inserting the tongue into the groove. The tongue of an extension element may comprise adhesive, e.g. thermoplastic adhesive, as a surface layer. The thickness of the surface layer may be selected such that tongue becomes locked into the groove, thus fixing the joint.

The height of the tongue of the profile or the extension element before inserting the tongue into the groove may also be significantly less than the height of the inlet part of the groove. Thus, by inserting the tongue into the groove, the adhesive may form a significant part of the tongue. In this way the properties of the tongue may be determined mainly by the adhesive. Thus, e.g. the strength the tongue may be engineered by selecting the adhesive such that the tongue (in the joint) has the specified properties. Some properties that can be specified will be discussed below in connection with the materials of the extension element.

Figure 7g shows another profile system as seen from top. In particular, Fig. 7g shows the first edge of the profile. The surface normal of the first surface 132 changes along the first edge. However, as shown in the figure, the surface normal of the first side may also change along the first edge 102.

As shown in Figs. 6a and 7a to 7g, at least one surface of the extended profile system is continuous. Therefore, the surface of the profile 100 preferably forms at least one continuous surface with at least one of
- the surface of another profile 100 (cf. Fig. 6a) and
- the surface of the extension element 250 (Figs. 7a to 7g).

Such a continuous surface may be visually attractive. The profile may form two opposite continuous surfaces as shows in the Figs. 6a and 7a to 7g. Preferably in a profile system
- the length of the extension element is selected such that when the extension element connects two profiles of the profile system, the first side of a first profile is in contact with the second side of a second profile, wherein the first side comprises the first groove and the second side comprises the second groove, whereby
- the profile 100 forms at least one continuous surface with the surface of another profile 100.

As shown e.g. in Fig. 7b, the length of the extension element may also be grater.

It is noted that the arrangement of a curvilinear profile and an extension element may be alternatively be made by
- arranging available a panel 150,
- arranging available a preform for an extension element, e.g. another panel, wherein the preform comprises a tongue,
- machining a groove to the panel 150,
- joining the preform of the extension element to the panel 150 using a groove of the panel and the tongue of the preform, and
- form pressing the arrangement of the panel 150 and the preform to an arrangement comprising the extension element 250 and the profile 100.

As discussed above, the extension element may comprise adhesive, e.g. thermoplastic adhesive. The extension element may comprise metal, to provide a stiff extension element. The extension element may comprise elastic material to provide a bendable joint between the extension element and the profile 100. The extension element may comprise electrically conductive material to provide electrical connections between profiles 100. The extension element may comprise electrically insulating material to electrically insulate the profiles 100. The strength of the extension element may be selected to be large or small in comparison to the profile 100. In particular the strength of the extension element may be lower than the strength of the profile, whereby breaking a joint between the extension element and the profile breaks specifically the extension element only. In particular the strength of the extension element may be greater than the strength of the profile, whereby breaking a joint between the extension element and the profile breaks specifically the profile only.

The extension element 250 may be made from the same material as the profile 100. In particular, the extension element may be made from a panel 150. The properties of the panel 150 were discussed above. For example, the panel may comprise wooden layers and adhesive in between the layers. To enable the form pressing of two joined panels (i.e. the preform for an extension element and a panel), the preform for an extension element (i.e. a panel from which the extension element is to be made) may comprise thermoplastic material in between layers.

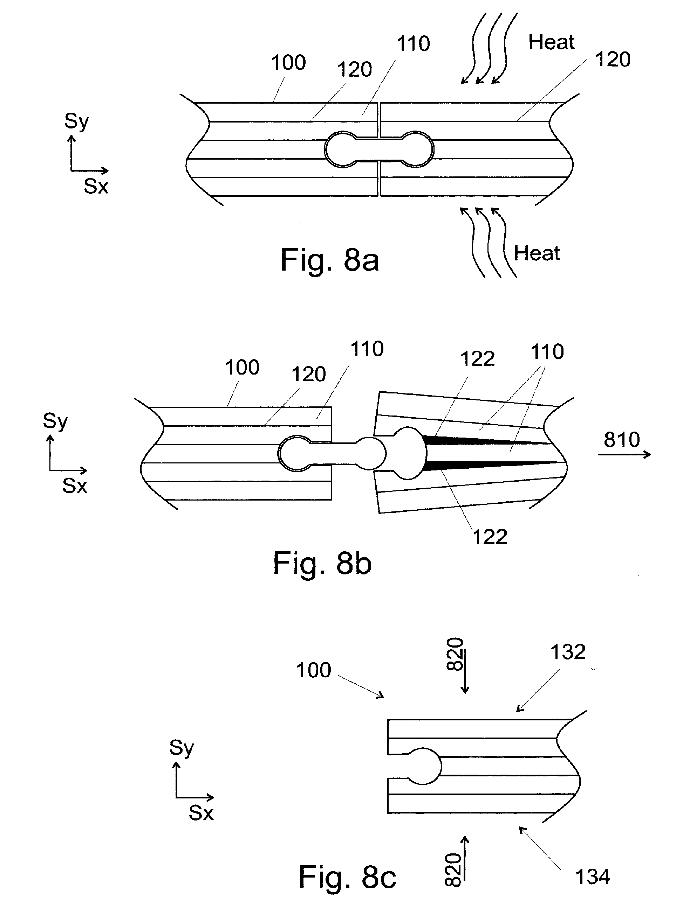

Referring to Figs. 8a to 9f, in an embodiment a joint may be formed or disassembled by melting the thermoplastic material. Figures 8a to 8c describe disassembling the joint. Controlled disassembling improves the recyclability of the materials.

Figure 8a shows a profile system, in which a joint is formed using an extension element between two profiles. Further details have been described in connection with Fig. 7a. In the embodiment of Fig. 8a, at least some of the adhesive 120 between the layers comprises thermoplastic material. More precisely, in a profile 100, the first groove 200 is located such that at least one adhesive layer that comprises thermoplastic material ends at the first groove 200. The layers that end at the first groove are marked with the reference number 122 in Fig. 8b. Notice that in the figures 8a to 8c, the first groove of the first profile (on right) opens to left, in contrast to Fig. 5a, as is shown with the direction arrow Sx (cf. also Fig. 1). However, it would be evident to a person skilled in the art to name the sides also differently.

Referring to Fig. 8a, an area near a side of a profile may be heated. As the profile is heated, the thermoplastic adhesive 120 melts. In particular, an adhesive layer 122 that ends at the first groove 200 melts. Therefore, when a force acts on a profile to pull the first profile from the second profile, the melted thermoplastic layer yields. Thereby the layers 110 of the profile delaminates from each other at one or more adhesive layers 122 that end at the first groove 200. The force is shown with the arrow 810 in Fig. 8b. As the layers delaminate, the height of the groove increases by pulling the first and the second profile with respect to each other, whereby the tongue of the extension element may be removed from the groove of the first profile 100. Even if not shown in the figure, it is evident that a tongue of another profile could be removed from the first groove 200 of the first profile 100 in a similar manner.

Finally, as the thermoplastic material is melted, the first profile may be reassembled by compressing the surfaces 132 and 134 towards each other, as depicted with the arrows 820 in Fig. 8c. Naturally, the profile 100 needs not to be reassembled.

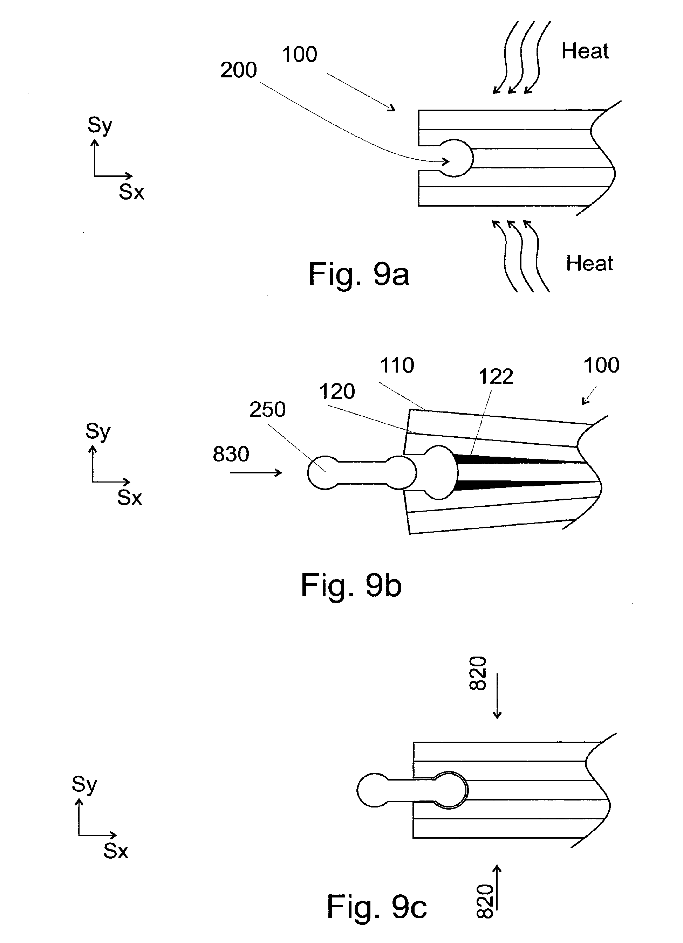

Figures 9a to 9f describe one method for assembling the joint. Referring to Fig. 9a, a profile 100 may first be heated. The profile 100 is heated such that the thermoplastic adhesive in between the layers melt.

Referring to Fig. 9b, in an embodiment the extension element 250, particularly the tongue, is shaped such that the tongue becomes thinner towards is outer end. Therefore the extension element can be pushed into the groove 200 by the force 830. Due to the shape of the tongue and the melted thermoplastic adhesive, the layers 110 of the profile delaminate from each other, a depicted in Fig. 8b. In particular the layers 110 of the profile delaminates from each other at one or more adhesive layers 122 that end at the first groove 200 of the profile. Thus, a tongue of the extension element 250 may be pushed into the groove.

Referring to Fig. 9c, the partly formed joint may be assembled by pushing the surfaces 132 and 134 of the profile towards each other, as discussed in connection with Fig. 8c.

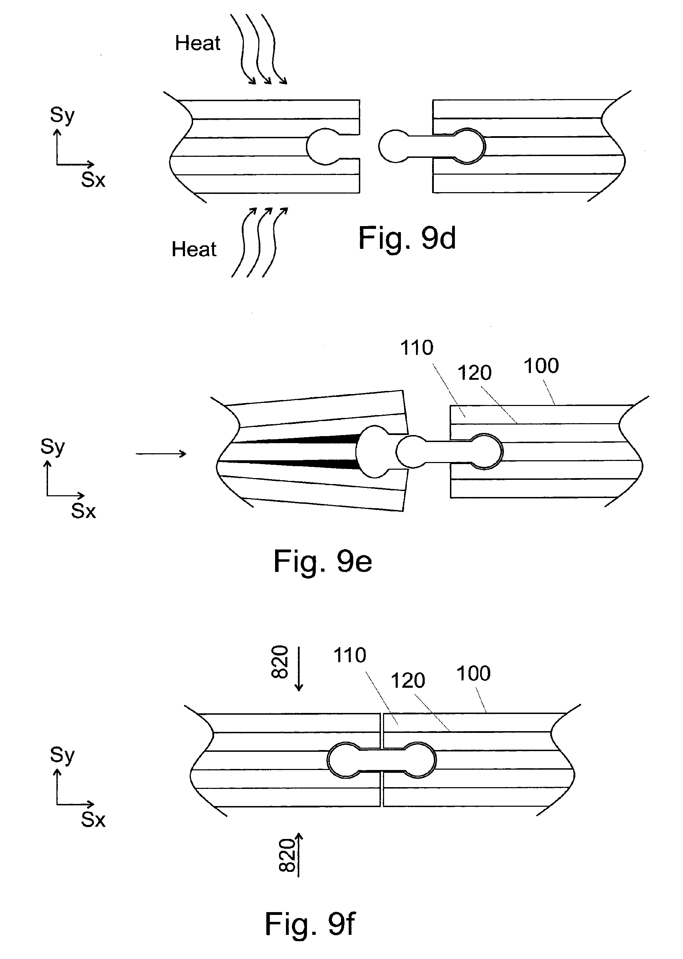

Referring to Figs. 9d to 9f, the other half of the joint can be assembled in a similar manner. Namely, a second profile 100 can be heated (Fig. 9d), the other tongue of the extension element can be pushed to the (second) groove of the second profile (Fig. 9e), and the joint can be closed by pushing the surfaces of the second profile towards each other (Fig. 9f). It is noted, that also the second groove of the profile is arranged into the profile 100 such that at least one adhesive layer that comprises thermoplastic material ends at the second groove.

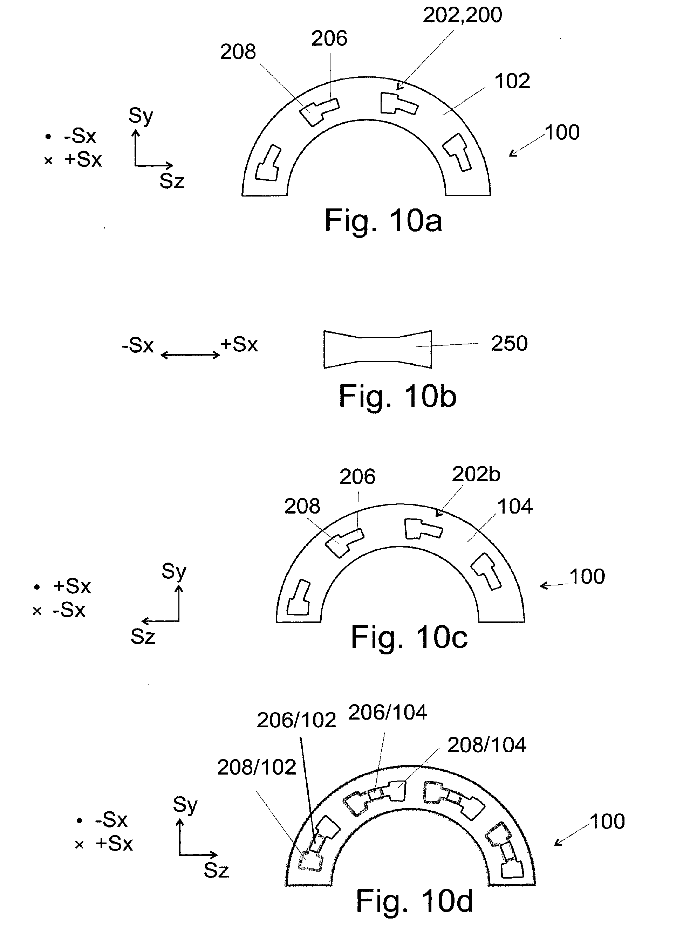

Figures 10a to 10d describe another method for forming a joint between two extendable curvilinear profiles 100.

Figure 10a shows the first side 102 of a first curvilinear element 100, as seen from the first side 102 towards the second side 104 (cf. Fig. 1). Notice that the x mark for +Sx in Fig. 10a is the direction into the plane of the figure, and the dot mark for -Sx is the direction out of the plane of the figure. Figure 10a shows the profile 100 having four short grooves 200 on the first side 102. As the profile is viewed from the side 102, only the inlet parts 202 of the grooves are shown. Therefore, the reference numeral "202,200" in shown in the figure 10a. The inlet part 202 on the groove 200 comprises an open area 208 and a locking area 206. The height of the open area 208 is at least the height of the tongue of a corresponding extension element. A corresponding extension element is show in Fig. 10b (not to scale). Moreover, the width of the open area 208 is at least the width of the tongue of the extension element. (Thus it is evident that the width of the groove is greater than the width of a tongue of the extension element.) Thereby, the tongue can be pushed into the groove at to open area 208 without heating the profile 100. However, such a joint between the extension element and the profile is not locked.

To lock the extension element 250 into the profile 100, the inlet part 202 of the groove 200 comprises also the locking area 206. The height of the locking area 206 is less than the height of the tongue of the corresponding extension element. Therefore, the height of the locking area 206 is also less than the height of the open area 208. The corresponding extension element is show in Fig. 10b (not to scale). The width of the locking area 206 may be approximately the same as the width of the tongue of the extension element. However, the width of the locking area 206 may also be more than the width of the tongue of the extension element. Furthermore, the width of the locking area 206 may also be less than the width of the tongue of the extension element.

After having pushed the tongue of the extension element into the groove, particularly through the to the open area 208 of the groove into the inboard part 204 (cf. Fig. 5a) of the groove, the tongue can be slided such that the tongue penetrates the locking area 206 of the groove 200. In this way the tongue of the extension element 250 becomes locked into the groove 200.

Figure 10b shows an embodiment of the extension element. As depicted in the figure, the tongue of the extension element becomes thicker towards is outer end. In case the joint between the extension element and the profile is made as described in Figs. 10a to 10d, the tongue of the extension element needs not to become thinner towards is outer end. Four extension elements of Fig. 10b may be used to extend the profile of Fig. 10a. However, a single extension element 250 may also comprise multiple narrow tongues on a first side, wherein these multiple tongues are adapted to fit into the open areas 208 of a profile. Such an extension element is not shown in Figs. 10a-10d.

Figure 10c shows the second side 104 of the curvilinear element 100, as seen from the second side 104 towards the first side 102 (cf. Fig. 1). Figure 10c shows the profile 100 having four short second grooves on the second side 104. Also the second grooves comprise an inlet part 202b, as shown in Fig. 10c. The inlet part 202b of the second groove comprises an open area 208 and a locking area 206. The height of the open area 208 is at least the height of the tongue of the extension element. The extension element is show in Fig. 10b. Moreover, the width of the open area 208 is at least the width of the tongue of the extension element. Thereby, the tongue can be pushed into the groove without heating the profile 100.

Having inserted at least one, preferably all the, extension elements to the first profile 100, and locked them into the inboard part 204 of the first groove of the first profile by the locking area 206, the extension element(s) can be inserted to the second groove(s) of a second profile. The second profile has a similar shape as the first profile. In particular the tongue(s) can be inserted to the open areas 208 of the second groove in the second profile. To lock the second profile to the tongue(s) of the extension element, the extension element(s) can be slided in respect to the second profile such that the tongue(s) of the extension element penetrate(s) the locking area(s) 206 of the second groove of the second profile. In this way the tongue(s) of the extension element(s) become(s) locked into the second groove(s).

To illustrate the locking of the profiles and the extension element, Fig. 10d shows the first side 102 of the first profile (as Fig. 10a) and the second side 104 of the second, similar, profile. In the figure, these sides are shown as seen from the first side 102 towards the second side 104 (cf. Fig. 1 and 10a). Thereby, Sz direction is reversed as compared to Fig. 10c. The locking area 206 of the first groove on the first side is shown with the reference "206/102". The open area 208 of the first groove on the first side is shown with the reference "208/102". The locking area 206 of the second groove on the second side is shown with the reference "206/104". The open area 208 of the second groove on the second side is shown with the reference "208/104". As seen from the figure, the locking area 206/102 is aligned with the locking area 206/104. The locking areas are aligned when a line that extends in the extension direction (e.g. ±Sx) comprises a point of both the locking areas 206/102 and 206/104. The extension direction may be the surface normal the first side 102 or the second side 104. The extension direction may be comprised in the plane of the third side 106 or the fourth side 108 (Fig. 1). As seen from the figure, the locking areas are aligned in the extension direction.

Therefore, the extension element 250 can be arranged
- into the inboard area 204 of the first groove 200 of the first profile 100 such that a first tongue of the extension element penetrates the locking area 206 of the first groove 200 and
- into the inboard area 204 of the second groove of the second profile such that a second tongue of the extension element penetrates the locking area 206 of the second groove, such that
- at least one of the third side 106 and the fourth side 108 of the first profile is aligned with at least one of the third side 106 and the fourth side 108 of the second profile (cf. Fig. 1).

The first groove 200 of the first profile 100 is located in the first side 102 of the first profile 100. The second groove of the second profile is located in the second side 104 of the second profile. The surface normal of the first side 102 or the second side 104 may be perpendicular the surface normal of the third side 106 or the fourth side 108 (Fig. 1).

As seen from Fig. 10a, on the first side 102, when seen towards the second side 104, the open area 208 is located into a direction as seen from the locking area 206. This direction may be parallel to the direction of the first edge at that point. In Fig. 10a, this direction is counter-clockwise. Referring to Fig. 10c, on the second side 104, when seen towards the first side 102, the open area 208 is located into the same direction (i.e. counter-clockwise) as seen from the locking area 206 (on the second surface 104). Referring to Fig. 10d, when seen from the same side towards to center of the profile 100:
- the open area 208/102 on the first side 102 is located into a first direction as seen from the locking area 206/102 on the first side 102,
- the open area 208/104 on the second side 104 is located into a second direction as seen from the locking area 206/104 on the second side 104, wherein
- the second direction is reverse to the first direction.

This has the technical effect that when the first tongue(s) of the extension element have been slided into the locking area, the subsequent sliding of the second profile will not move the first tongue(s) out of the locking area. More specifically, the first tongue(s) of the extension element may first be slided into the locking area 206 of a groove on the first side of the first element. With the above discussion and definition of the directions, the first tongues are slided in the second direction, i.e. from the open area 208/102 to the locking area 206/102. Referring to Fig. 10d, this direction is clockwise. Thereafter the second tongue(s) of the extension element (e.g. fig 10b) may be inserted to the open areas 208 (i.e. open areas 208/104) on a second side of a second similar profile. The second profile may again be slided relative to the extension element such that the second tongues move to the locking areas 206 (i.e. 206/104) on the second surface 104 of the second profile. Referring to Fig. 10d, this sliding may be done by moving the second profile in the second direction (e.g. clockwise). In this way, the second sliding does not move the first tongues from the first locking areas (206/102). Instead, the second sliding further tightens the first tongues in the first locking area 206/102, while simultaneously tightening the second tongues to the second locking areas 206/104. Referring e.g. to Figs. 7a, 7b, and 10b, the extension element may comprise a first tongue and a second tongue. E.g. in Fig. 10b, the first tongue may be the one pointing in the -Sx direction, and the second tongue may be the one pointing in the +Sx direction.

Figures 11a - 11j show some extendable curvilinear profiles 100 in an end view, as seen from the first side 102 towards the second side 104. Thus, the first edge is shown in all the figures 11a to 11j. Even if the groove 200 is not shown in the figures, all the profiles of Figs. 11 a to 11j comprise a first groove on the first side 102. It is noted that the extendable profiles 100 is not necessarily curvilinear.

In the figures 11 a to 11j the surface normal of the first surface 132 changes along the first edge 136. In figures 11a and 11c, the surface normal changes abruptly by 90 degrees. In figure 11b, the surface normal changes abruptly two times by 90 degrees, in total the surface normal changes by 180 degrees. The corners of the first surface 132 are sharp, whereby the edge 136 comprises a point that defines an angle 144 together with the edge 136. Therefore, the radius of curvature of the first surface either infinite (at the locations, wherein the surface 132 is essentially planar) or the radius of curvature is undefined (at the locations where the surface comprises the angle 144). The shapes shown in Figs. 11 a to 11c are hard to manufacture by form pressing.

The surface normal of the first surface 132 on the first edge 136, are denoted by Sn1 and Sn2 at a first point of the edge and at a second point of the edge, respectively. The surface normals are not depicted in all figures, however, Figs. 11a, 11b, 11f, 11g, 11h, 11i, and 11j show these surface normals. Referring to Fig. 11a, The surface normal Sn1 of the first surface 132 on the first edge 136 at the first point of the edge forms an angle α with the surface normal Sn2 of the first surface 132 on the first edge 136 at the second point of the edge. Therefore, the surface normal changes by 90 degrees in Fig. 11 a. In a similar manner the surface normal changes by 180 degrees in Fig. 11 b.

Figure 11d to 11i show some extendable curvilinear profiles 100, which are more easily manufactured by form pressing. In Figs. 11c to 11i, at a point of the first edge, a radius of curvature of the first surface exists. Furthermore the radius of curvature is relatively small. The term "relatively small" in connection with radius of curvature refers to a radius of curvature of at most 2 m, preferably at most 1 m. and more preferably at most 50 cm. The radius of curvature may be even less, e.g. at most 20 cm or at most 10 cm. Preferably at a point of the first edge, a radius of curvature of the first surface exists and is at most 0.5 m. Preferably a radius of curvature, possibly infinite, exists at all points of the edge 136 (i.e. the edge does not comprise an angle 144).

As depicted in Fig. 11e, the first edge 136 of the profile 100 may comprise two end points 174 and 176. This is the results of the profile 100 being made from a panel 150. The two end points 174 and 176 of the edge of the profile 100 may be the end points of the panel 150. The two end points 174 and 176 are attached to each other only with the first edge 136, whereby the profile is an open profile. These features apply to all figures 11a to 11j.

In Fig. 11f the surface normal Sn1 of the first surface 132 on the first edge 136 at the first point of the edge forms an angle α with the surface normal Sn2 of the first surface 132 on the first edge 136 at the second point of the edge, wherein the angle is 180 degrees. Therefore, the surface normal changes by 180 degrees in Fig. 11f.

In Fig. 11g the surface normal Sn1 forms an angle α with the surface normal Sn2, wherein the angle is 90 degrees. Therefore, the surface normal changes by 90 degrees in Fig. 11g.

In Fig. 11h the surface normal Sn1 forms an angle α with the surface normal Sn2, wherein the angle is 90 degrees. Therefore, the surface normal changes by 90 degrees in Fig. 11 h.

In Fig. 11i the surface normal Sn1 forms an angle α with the surface normal Sn2, wherein the angle is 180 degrees. Therefore, the surface normal changes by 180 degrees in Fig. 11 i.

Finally, in Fig. 11j the surface normal Sn1 forms an angle α with the surface normal Sn2, wherein the angle is 120 degrees. Therefore, the surface normal changes by 120 degrees in Fig. 11j.

Referring to Figs. 12a1 to 12c3, the extendable profile may form a tube.

Referring to Fig. 12a1, a panel 150 may be form pressed, as discussed above, to a curvilinear extendable profile 100. In Fig. 12a1 the surface normal Sn1 forms an angle α with the surface normal Sn2, wherein the angle is large, about 350 degrees. It is further noted that the surface normal Sn1 and Sn2 form the angle α such that the angle is measured along the edge 136. As the angle α is measured along the edge 136, angles greater than 180 degrees are also possible. Naturally, the surface normal Sn1 and Sn2 define also another angle, which in Fig. 12a1 would open towards the opening 172.

As the extendable profile of Fig. 12a1 is made from a panel 150, the edge 136 comprises two end points 174 and 176.

The curvilinear extendable profile 100 of Fig. 12a1 can be closed to form a closed tube. In particular, in the curvilinear extendable profile of Fig. 12a2:
- the two end points 174 and 176 are attached to each other with the first edge 136 and with a joint 170, wherein
- the joint 170 does not comprise a point of the first edge 136, and
- the joint 170 comprises adhesive, whereby the first edge 136 and the joint 170 together form a closed loop.

The adhesive at the joint 170 may comprise thermoplastic adhesive, whereby the adhesive of the joint may also be melted before disassembling an attachment between the profile 100 and another profile or an extension element.

As the joint 170 may be thin, the surface normal Sn1 and Sn2 of Figure 12a2 may be uni-directional. Thereby the angle α, as measured along the edge 136, is 360 degrees. As a joint 170 is formed, the edge 136 still comprises the two end points 174 and 176, the end points limiting the joint 170 in between the points. The joint 170 may be visible in the structure.

In the direction Sx in Fig. 12a2, the joint 170 may be parallel to the direction Sx. However such a joint is not necessarily strong. The extendable profile 100 of Fig. 12a2 may be extendable in the ±Sx direction. However, it is possible to define the directions such profile of Fig. 12a1 is extendable to itself, as shown in Figs. 12a1 and 12a2. In this case the extension direction would be upwards in the figures. Thus, the profile of Fig. 12a2 is not necessarily extendable in the direction perpendicular to the plane on the Fig. 12a2. A groove may be manufactured to the curvilinear profile or to a panel. In particular, a groove may be manufactured before from pressing. Multiple grooves may be manufactured, e.g. to allow for the extension shown from Fig. 12a1 to Fig. 12a2 and to further enable extension in the ±Sx direction of Fig. 12a2.

Referring to Figs. 12b1 to 12b3, tubular profiles can be made from a panel 150 also slightly differently. Such a tubular profile 100 can be made by
- arranging available a non-rectangular panel 150 having the shape of a parallelogram. The panel may comprise at least two layers and thermoplastic material in between the layers.
- orienting one side 102 of the panel perpendicular to a direction Sx, whereby two sides of the panel 150 form an angle β with the direction Sx,
- rolling the panel 150 to a profile 100 in such that
   ∘ Sx forms the axis for rolling, and
   ∘ the radius of curvature of the rolling is selected such that the one side 102 forms a closed edge 136 of the profile 100.

A groove may be manufactured to the curvilinear profile 100 or to a panel 150. In particular, a groove or grooves may be manufactured to the panel 150 before rolling.

The properties of the panel 150 have been discussed above. In addition, such a panel comprises the two end points 174 and 176. A joint 170 is formed in between the two end points. The joint may comprise a structure of a tongue and a groove. Referring to Fig. 12b2, the joint 170 is curvilinear. The joint encircles the central axis of the profile 100 as a helical spring. The length of the joint 170 is defined by the length of a side of the panel 150 (Fig. 12b1, not the side 102 or 104), and the helical shape is defined by the angle β (Fig. 12b1). The cross section of the tubular profile 100 may be circle, as shown in Fig. 12b3. In case the cross section is a circle, the diameter of the circle is defined by the length Le of a side of the panel 150. In particular the diameter may equal Le/π.

Referring to Figs. 12c1 to 12c3, an extendable curvilinear profile 100 can also be made by:
- arranging available a rectangular film 160. The film 160 may comprise only one layer 152. The film 160 may comprise thermoplastic adhesive on one side.
- orienting one side 102 of the film 160 perpendicular to a direction Sx, whereby two sides of the file ar parallel to the direction Sx,
- arranging, if needed, thermoplastic material on the film,
- rolling the film 160 to a profile 100 in such that
   ∘ Sx forms the axis for rolling, and
   ∘ the radius of curvature of the rolling is selected such that the film 160 forms a structure comprising at least two layers and thermoplastic material in between the layers.

A groove may be manufactured to the curvilinear profile. The groove may be manufactured by machining the (rolled) curvilinear profile. Alternatively, the shape of the film 160 may be adapted such that after rolling, the curvilinear profile comprises a groove. In practice, the film may be narrower in the central area than near the boundaries.

The film 160 may have the same properties as a layer a the panel 150. Properties of the panel 150 have been discussed above. The film 160 may comprise more than one layer. The film 160 may comprise adhesive in between the layers. The film 160 may comprise thermoplastic adhesive in between the layers.

The film 160 needs not to be rectangular. The film may be more generally a parallelogram as in Fig. 12b1. The rolling of the film may be performed such that the layers overlap each other partly. In this way, a single-layered film may be used to produce a multi-layered profile. The sides of the profile, which may comprise only a single layer, may be removed from the profile e.g. by cutting or sawing.

The film 160 comprises end points. However, the edge 136 of the profile 100 (e.g. the outer edge) does not comprise these end points. Preferably the edge 136 comprises the end points 174 and 176, whereby the profile 100 may be made from a panel 150. The end points may be the end points of an edge of the panel 150. This simplifies the manufacturing procedure.

Some features of the invention are summarized in the appended claims. In addition, further technical features have been disclosed as detailed in the examples.

Example 1. The profile of claim 4, wherein
- at a point of the first edge, a radius of curvature of the first surface exists and is at most 0.5 m.

Example 2. The profile of any of the claims 1 to 6, wherein
- the profile comprises a tongue,
- the tongue is arranged on a second side of the profile, and
- the second side of the profile is located opposite to the first side of the profile;
whereby the profile is extendable using the first groove of the profile and the tongue of another similar profile.

Example 3. The profile of claim 7, wherein
- the adhesive comprises thermoplastic material and
- the second groove is located such that at least one adhesive layer that comprises thermoplastic material ends at the second groove;
whereby a joint may be assembled by melting the thermoplastic material.

Example 4. The profile of claim 7 or example 3 wherein
- the second groove comprises an inlet part and a inboard part, wherein
- the height of the inlet part is smaller the height of the inboard part;
whereby a tongue having a shape adapted to the shape of the groove may be locked into the second groove.

Example 5. The profile of any of the claims 1 to 7 or examples 1 to 4 wherein,
- the first groove comprises an inboard part and an inlet part, wherein the inlet part comprises a first open area and a first locking area, wherein
- the height of the first locking area is less than the height of the first open area;
whereby an extension element can be locked to the first groove of a first profile by using the open area and by sliding the tongue in respect to the profile.

Example 6. The profile system of claim 9 or 10 wherein,
- the length of the extension element is selected such that when the extension element connects two profiles of the profile system, the first side of a first profile is in contact with the second side of a second profile, wherein the first side comprises the first groove and the second side comprises the second groove;
whereby two profiles of the profile system are connectable such that the extension element of the joint is not visible when connecting the two profiles.

A surface thus formed from a surface of the profile and a surface of another profile may be continuous.

Example 7. The profile system of claim 9 or 10 wherein,
- the length of the extension element is selected such that when the extension element connects two profiles of the profile system, the first side of a first profile is in contact with the extension element, and the second side of a second profile is in contact with the extension element, wherein the first side comprises the first groove and the second side comprises the second groove;
whereby two profiles of the profile system are connectable such that the extension element of the joint is visible when connecting the two profiles.

A surface thus formed from a surface of the profile and a surface of the extension element may be continuous.

Example 8. The profile system of claim 9 or 10, or example 6 or 7 wherein
- the first tongue of the extension element becomes thinner towards is outer end;
whereby the extension element can be pushed into the groove of a heated profile.

## Claims

1. A profile, comprising
- a first surface and a second surface, wherein the second surface is opposite to the first surface, the surfaces are connected by sides of the profile, and the sides of the profile and the surfaces of the profile meet at the edges of the profile,
- at least two layers, wherein the first layer comprises the first surface and the second layer comprises the second surface,
- thermoplastic material in between the layers, and
- at least a first groove in a first side of the profile, wherein
- the first groove is located such that at least one adhesive layer that comprises thermoplastic material ends at the first groove;
whereby a joint formed using the groove may be assembled or disassembled by melting the thermoplastic material.

2. The profile of claim 1, wherein
- the profile is curvilinear, whereby the surface normal of the first surface of the profile changes along a first edge of the profile,
- the first edge of the profile is comprised by a first side of the profile, and
- the first groove is arranged in the first side of the profile;
whereby the first surface of the profile is at least partly convex or concave and the second surface of the profile is at least partly concave or convex, respectively; a structure is coverable by the at least partly convex surface; and the profile is extendable using the first groove.

3. The profile of claim 2, wherein
- the first edge comprises two end points and
- (a) the two end points are attached to each other with the first edge and with a joint, wherein the joint does not comprise a point of the first edge, and the joint comprises adhesive, whereby the first edge and the joint together form a closed loop, or
- (b) the two end points are attached to each other only with the first edge, whereby the profile is an open profile;
whereby the profile can be made from a panel; the profile is easily manufactured because of the layered structure; and the profile is rigid because of the adhesive.

4. The profile of any of the claims 1 to 3, wherein
- at least one of the layers comprise wood;
whereby the profile is strong, light, and at least partly recyclable or burnable.

5. The profile of any of the claims 1 to 4, wherein
- at a point of the first edge, a radius of curvature of the first surface exists;
whereby the profile can be manufactured in a form pressing process.

6. The profile of any of the claims 1 to 5 wherein
- the first groove comprises an inlet part and an inboard part, wherein
- the height of the inlet part is smaller the height of the inboard part;
whereby a tongue having a shape adapted or adaptable to the shape of the first groove may be locked into the groove.

7. The profile of any of the claims 1 to 6, wherein
- the profile comprises a second groove,
- the second groove is located in a second side of the profile, and
- the second side of the profile is located opposite to the first side of the profile;
whereby the profile is extendable using the first groove of the profile, the second groove of another similar profile, and an extension element comprising a first tongue adapted or adaptable to the first groove and a second tongue adapted or adaptable to the second groove.

8. The profile of any of the claims 1 to 7 wherein,
- the first groove comprises an inboard part and an inlet part, wherein the inlet part comprises a first open area and a first locking area, wherein
- the height of the first locking area is less than the height of the first open area, and
- the profile comprises a second groove, wherein the second groove is located in a second side of the profile, and the second side of the profile is located opposite to the first side of the profile,
- the second groove comprises a second inboard part and a second inlet part, wherein the second inlet part comprises a second open area and a second locking area, wherein
- the height of the second locking area is less than the height of the second open area, and
- the first locking area is aligned with the second locking area in the extension direction;
whereby an extension element can be locked to the first groove of a first profile and to a second groove of a similar second profile by using the open areas and by sliding the tongues in respect to the profiles.

9. A profile system comprising,
- the profile of any of the claims 1 to 8 and
- an extension element comprising a first tongue adapted or adaptable to the shape of the first groove of the profile;
whereby the profile is extendable using the first groove of the profile and the extension element.

10. The profile system of claim 9, wherein
- the profile further comprises a second groove, wherein the second groove is located in the a second side of the profile, and the second side of the profile is located opposite to the first side of the profile, and
- the extension element further comprises a second tongue adapted or adaptable to the second groove of the profile;
whereby the profile is further extendable using the first groove of the profile, the extension element, and the second groove of another similar profile.

11. The profile system of claim 9 or 10 wherein,
- the first groove comprises an inboard part and an inlet part, wherein the inlet part comprises an open area and a locking area,
- the height of the open area is at least the height of the tongue of the extension element,
- the height of the locking area is less than the height of the tongue of the extension element, and
- the width of the open area is at least the width of the tongue of the extension element;
whereby the tongue can be pushed into the groove without heating the profile and without using adhesive in a groove and the joint between the extension element and the profile can be locked.

12. A method for disassembling a joint between a first profile and an extension element or another profile, wherein
- the first profile comprises
∘ a first surface and a second surface, the second surface being parallel to the first surface, the surfaces being connected by sides of the profile, wherein the sides of the profile and the surfaces of the profile meet at the edges of the profile,
∘ at least two layers, wherein the first layer comprises the first surface and the second layer comprises the second surface,
∘ thermoplastic material in between the layers, and
∘ a first groove in at least one side, wherein
∘ the first groove is located such that at least one layer that comprises thermoplastic material ends at the first groove; and
- the joint comprises
∘ a tongue located in the first groove, wherein the tongue is comprised by the extension element or another profile;
wherein the method comprises
- heating the first profile such that the thermoplastic material melts, whereby
the height of the groove may be increased by pulling the profile from the extension element or the other profile, whereby the tongue may be removed from the groove.

13. A method for manufacturing the profile of any of the claims 1 to 9, the method comprising
- arranging available a panel comprising
∘ a first surface and a second surface, the second surface being opposite to the first surface, the surfaces being connected by sides of the panel, wherein the sides of the panel and the surfaces of the panel meet at the edges of the panel,
∘ at least two layers, wherein the first layer comprises the first surface and the second layer comprises the second surface, and
∘ thermoplastic material in between the layers; and
- machining a first groove in at least one side of the panel or a profile made from the panel.

14. The method of claim 13, further comprising
- form pressing the panel to a curvilinear profile, and
- machining a first groove in at least one side of the panel before form pressing.

15. The method of claim 14, comprising
- form pressing the panel to a curvilinear profile such that the first groove is located in a first side of the profile, wherein the first side of the profile comprises a first edge of the profile, and the surface normal of the first surface of the profile changes along the first edge of the profile.

## Patentansprüche

1. Profil, das Folgendes umfasst:
- eine erste Fläche und eine zweite Fläche, wobei die zweite Fläche der ersten Fläche gegenüber liegt, wobei die Flächen durch Seiten des Profils verbunden sind, und wobei sich die Seiten des Profils und die Flächen des Profils an den Rändern des Profils treffen,
- mindestens zwei Schichten, wobei die erste Schicht die erste Fläche umfasst und die zweite Schicht die zweite Fläche umfasst,
- thermoplastisches Material zwischen den Schichten, und
- mindestens eine erste Nut in einer ersten Seite des Profils, wobei
- die erste Nut so angeordnet ist, dass mindestens eine Klebeschicht, die thermoplastisches Material enthält, an der ersten Nut endet;
wobei eine Verbindungsfuge, die unter Verwendung der Nut gebildet wird, durch Schmelzen des thermoplastischen Materials hergestellt oder gelöst werden kann.

2. Profil nach Anspruch 1, wobei
- das Profil krummlinig ist, wobei sich die Fläche, die normal zur ersten Fläche des Profils verläuft, entlang eines ersten Randes des Profils ändert,
- der erste Rand des Profils aus einer ersten Seite des Profils besteht und
- die erste Nut in der ersten Seite des Profils angeordnet ist;
wobei die erste Fläche des Profils mindestens teilweise konvex oder konkav ist bzw. die zweite Fläche des Profils mindestens teilweise konkav oder konvex ist; eine Struktur durch die mindestens teilweise konvexe Fläche abgedeckt werden kann; und das Profil unter Verwendung der ersten Nut verlängert werden kann.

3. Profil nach Anspruch 2, wobei
- der erste Rand zwei Endpunkte umfasst, und
(a) die zwei Endpunkte mit dem ersten Rand und mit einer Verbindungsfuge aneinander befestigt sind, wobei die Verbindungsfuge keinen Punkt des ersten Randes umfasst, und die Verbindungsfuge Klebstoff umfasst, wobei der erste Rand und die Verbindungsfuge zusammen eine geschlossene Schleife bilden, oder
(b) die zwei Endpunkte nur mit dem ersten Rand aneinander befestigt sind, wobei das Profil ein offenes Profil ist;
wobei das Profil aus einem Paneel hergestellt werden kann; das Profil dank der Schichtstruktur auf einfache Weise hergestellt werden kann; und das Profil aufgrund des Klebstoffs steif ist.

4. Profil nach einem der Ansprüche 1 bis 3, wobei
- mindestens eine der Schichten Holz umfasst;
wobei das Profil fest und leicht ist und mindestens teilweise recycelt oder verbrannt werden kann.

5. Profil nach einem der Ansprüche 1 bis 4, wobei
- an einem Punkt des ersten Randes ein Krümmungsradius der ersten Fläche existiert;
wobei das Profil in einem Formpressprozess hergestellt werden kann.

6. Profil nach einem der Ansprüche 1 bis 5, wobei
- die erste Nut einen Einlassteil und einen Innenteil umfasst, wobei
- die Höhe des Einlassteils kleiner als die Höhe des Innenteils ist; wobei eine Zunge, die eine Form aufweist, die an die Form der ersten Nut angepasst ist oder angepasst werden kann, in die Nut hinein arretiert werden kann.

7. Profil nach einem der Ansprüche 1 bis 6, wobei
- das Profil eine zweite Nut umfasst,
- die zweite Nut in einer zweiten Seite des Profils angeordnet ist und
- die zweite Seite des Profils gegenüber der ersten Seite des Profils angeordnet ist;
wobei das Profil unter Verwendung der ersten Nut des Profils, der zweiten Nut von einem anderen, ähnlichen Profil und eines Verlängerungselements, das eine erste Zunge umfasst, die an die erste Nut angepasst ist oder angepasst werden kann, und eine zweite Zunge umfasst, die an die zweite Nut angepasst ist oder angepasst werden kann, verlängert werden kann.

8. Profil nach einem der Ansprüche 1 bis 7, wobei
- die erste Nut einen Innenteil und einen Einlassteil umfasst, wobei der Einlassteil einen ersten offenen Bereich und einen ersten Arretierungsbereich umfasst, wobei
- die Höhe des ersten Arretierungsbereichs geringer ist als die Höhe des ersten offenen Bereichs, und
- das Profil eine zweite Nut umfasst, wobei die zweite Nut in einer zweiten Seite des Profils angeordnet ist, und die zweite Seite des Profils gegenüber der ersten Seite des Profils angeordnet ist,
- die zweite Nut einen zweiten Innenteil und einen zweiten Einlassteil umfasst, wobei der zweite Einlassteil einen zweiten offenen Bereich und einen zweiten Arretierungsbereich umfasst, wobei
- die Höhe des zweiten Arretierungsbereichs geringer ist als die Höhe des zweiten offenen Bereichs, und
- der erste Arretierungsbereich in der Verlängerungsrichtung auf den zweiten Arretierungsbereich ausgerichtet ist;
wobei ein Verlängerungselement an der ersten Nut eines ersten Profils und an einer zweiten Nut von einem ähnlichen zweiten Profil unter Verwendung der offenen Bereiche und durch Verschieben der Zungen relativ zu den Profilen arretiert werden kann.

9. Profilsystem, das Folgendes umfasst:
- das Profil nach einem der Ansprüche 1 bis 8 und
- ein Verlängerungselement, das eine erste Zunge umfasst, die an die Form der ersten Nut des Profils angepasst ist oder angepasst werden kann;
wobei das Profil unter Verwendung der ersten Nut des Profils und des Verlängerungselements verlängert werden kann.

10. Profilsystem nach Anspruch 9, wobei
- das Profil des Weiteren eine zweite Nut umfasst, wobei die zweite Nut in der zweiten Seite des Profils angeordnet ist, und die zweite Seite des Profils gegenüber der ersten Seite des Profils angeordnet ist, und
- das Verlängerungselement des Weiteren eine zweite Zunge umfasst, die an die zweite Nut des Profils angepasst ist oder angepasst werden kann;
wobei das Profil des Weiteren unter Verwendung der ersten Nut des Profils, des Verlängerungselements und der zweite Nut von einem anderen ähnlichen Profil verlängert werden kann.

11. Profilsystem nach Anspruch 9 oder 10, wobei
- die erste Nut einen Innenteil und einen Einlassteil umfasst, wobei der Einlassteil einen offenen Bereich und einen Arretierungsbereich umfasst,
- die Höhe des offenen Bereichs mindestens so groß ist wie die Höhe der Zunge des Verlängerungselements,
- die Höhe des Arretierungsbereichs geringer ist als die Höhe der Zunge des Verlängerungselements, und
- die Breite des offenen Bereichs mindestens so groß ist wie die Breite der Zunge des Verlängerungselements;
wobei die Zunge in die Nut geschoben werden kann, ohne das Profil zu erwärmen und ohne einen Klebstoff in einer Nut zu verwenden, und die Verbindungsfuge zwischen dem Verlängerungselement und dem Profil arretiert werden kann.

12. Verfahren zum Trennen einer Verbindungsfuge zwischen einem ersten Profil und einem Verlängerungselement oder einem weiteren Profil, wobei
- das erste Profil Folgendes umfasst:
∘ eine erste Fläche und eine zweite Fläche, wobei die zweite Fläche parallel zu der ersten Fläche verläuft, wobei die Flächen durch Seiten des Profils verbunden sind, wobei sich die Seiten des Profils und die Flächen des Profils an den Rändern des Profils treffen,
∘ mindestens zwei Schichten, wobei die erste Schicht die erste Fläche umfasst und die zweite Schicht die zweite Fläche umfasst,
∘ thermoplastisches Material zwischen den Schichten, und
∘ eine erste Nut in mindestens einer Seite, wobei
∘ die erste Nut so angeordnet ist, dass mindestens eine Schicht, die thermoplastisches Material umfasst, an der ersten Nut endet; und
- die Verbindungsfuge Folgendes umfasst:
∘ eine Zunge, die in der ersten Nut angeordnet ist, wobei die Zunge aus dem Verlängerungselement oder einem weiteren Profil besteht;
wobei das Verfahren Folgendes umfasst:
- Erwärmen des ersten Profil dergestalt, dass das thermoplastische Material schmilzt, wobei
die Höhe der Nut vergrößert werden kann, indem das Profil von dem Verlängerungselement oder dem weiteren Profil aus gezogen wird, wobei die Zunge aus der Nut entfernt werden kann.

13. Verfahren zum Herstellen des Profils nach einem der Ansprüche 1 bis 9, wobei das Verfahren Folgendes umfasst:
- Bereitstellen eines Paneels, das Folgendes umfasst:
∘ eine erste Fläche und eine zweite Fläche, wobei die zweite Fläche der ersten Fläche gegenüber liegt, wobei die Flächen durch Seiten des Paneels verbunden sind, und wobei sich die Seiten des Paneels und die Flächen des Paneels an den Rändern des Paneels treffen,
∘ mindestens zwei Schichten, wobei die erste Schicht die erste Fläche umfasst und die zweiten Schicht die zweite Fläche umfasst, und
∘ thermoplastisches Material zwischen den Schichten; und
- Einarbeiten einer ersten Nut in mindestens eine Seite des Paneels oder eines Profils, das aus dem Paneel hergestellt ist.

14. Verfahren nach Anspruch 13, das des Weiteren Folgendes umfasst:
- Formpressen des Paneels zu einem krummlinigen Profil, und
- Einarbeiten einer ersten Nut in mindestens eine Seite des Paneels vor dem Formpressen.

15. Verfahren nach Anspruch 14, das Folgendes umfasst:
- Formpressen des Paneels zu einem krummlinigen Profil dergestalt, dass die erste Nut in einer ersten Seite des Profils angeordnet ist, wobei die erste Seite des Profils einen ersten Rand des Profils umfasst, und die Fläche, die normal zur ersten Fläche des Profils verläuft, sich entlang des ersten Randes des Profils ändert.

## Revendications

1. Profilé, comprenant
- une première surface et une deuxième surface, dans lequel la deuxième surface est opposée à la première surface, les surfaces sont connectées par des côtés du profilé, et les côtés du profilé et les surfaces du profilé se rencontrent au niveau des bords du profilé,
- au moins deux couches, dans lequel la première couche comprend la première surface et la deuxième couche comprend la deuxième surface,
- un matériau thermoplastique entre les couches, et
- au moins une première rainure dans un premier côté du profilé, dans lequel
- la première rainure est située de telle manière qu'au moins une couche adhésive qui comprend un matériau thermoplastique se termine au niveau de la première rainure ;
d'où il résulte qu'un joint formé en utilisant la rainure peut être assemblé ou désassemblé en fondant le matériau thermoplastique.

2. Profilé selon la revendication 1, dans lequel
- le profilé est curvilinéaire, d'où il résulte que la surface normale à la première surface du profilé change le long d'un premier bord du profilé,
- le premier bord du profilé est compris par un premier côté du profilé, et
- la première rainure est agencée dans le premier côté du profilé ;
d'où il résulte que la première surface du profilé est au moins partiellement convexe ou concave et la deuxième surface du profilé est au moins partiellement concave ou convexe, respectivement ; une structure peut être recouverte par la surface au moins partiellement convexe ; et le profilé est extensible en utilisant la première rainure.

3. Profilé selon la revendication 2, dans lequel
- le premier bord comprend deux points d'extrémité et
- (a) les deux points d'extrémité sont attachés l'un à l'autre avec le premier bord et avec un joint, dans lequel le joint ne comprend pas un point du premier bord, et le joint comprend un adhésif, d'où il résulte que le premier bord et le joint forment ensemble une boucle fermée, ou
- (b) les deux points d'extrémité sont attachés l'un à l'autre uniquement avec le premier bord, d'où il résulte que le profilé est un profilé ouvert ;
d'où il résulte que le profilé peut être fabriqué à partir d'un panneau ; le profilé est facilement fabriqué du fait de la structure en couches ; et le profilé est rigide du fait de l'adhésif.

4. Profilé selon l'une quelconque des revendications 1 à 3, dans lequel
- au moins une des couches comprend du bois ;
d'où il résulte que le profilé est résistant, léger, et au moins partiellement recyclable ou brûlable.

5. Profilé selon l'une quelconque des revendications 1 à 4, dans lequel
- en un point du premier bord, un rayon de courbure de la première surface existe ;
d'où il résulte que le profilé peut être fabriqué dans un procédé de pressage en forme.

6. Profilé selon l'une quelconque des revendications 1 à 5, dans lequel
- la première rainure comprend une partie d'entrée et une partie intérieure, dans lequel
- la hauteur de la partie d'entrée est plus petite que la hauteur de la partie intérieure ;
d'où il résulte qu'une languette ayant une forme adaptée ou pouvant être adaptée à la forme de la première rainure peut être bloquée dans la rainure.

7. Profilé selon l'une quelconque des revendications 1 à 6, dans lequel
- le profilé comprend une deuxième rainure,
- la deuxième rainure est située dans un deuxième côté du profilé, et
- le deuxième côté du profilé est situé opposé au premier côté du profilé ;
d'où il résulte que le profilé est extensible en utilisant la première rainure du profilé, la deuxième rainure d'un autre profilé similaire, et un élément d'extension comprenant une première languette adaptée ou pouvant être adaptée à la première rainure et une deuxième languette adaptée ou pouvant être adaptée à la deuxième rainure

8. Profilé selon l'une quelconque des revendications 1 à 7, dans lequel
- la première rainure comprend une partie intérieure et une partie d'entrée, dans lequel la partie d'entrée comprend une première zone ouverte et une première zone de blocage, dans lequel
- la hauteur de la première zone de blocage est inférieure à la hauteur de la première zone ouverte, et
- le profilé comprend une deuxième rainure, dans lequel la deuxième rainure est située dans un deuxième côté du profilé, et le deuxième côté du profilé est situé opposé au premier côté du profilé,
- la deuxième rainure comprend une deuxième partie intérieure et une deuxième partie d'entrée, dans lequel la deuxième partie d'entrée comprend une deuxième zone ouverte et une deuxième zone de blocage, dans lequel
- la hauteur de la deuxième zone de blocage est inférieure à la hauteur de la deuxième zone ouverte, et
- la première zone de blocage est alignée avec la deuxième zone de blocage dans le sens d'extension ;
d'où il résulte qu'un élément d'extension peut être bloqué sur la première rainure d'un premier profilé et sur une deuxième rainure d'un deuxième profilé similaire en utilisant les zones ouvertes et en faisant coulisser les languettes par rapport aux profilés

9. Système de profilé comprenant
- le profilé selon l'une quelconque des revendications 1 à 8 et
- un élément d'extension comprenant une première languette adaptée ou pouvant être adaptée à la forme de la première rainure du profilé ;
d'où il résulte que le profilé est extensible en utilisant la première rainure du profilé et l'élément d'extension.

10. Système de profilé selon la revendication 9, dans lequel
- le profilé comprend en outre une deuxième rainure, dans lequel la deuxième rainure est située dans un deuxième côté du profilé, et le deuxième côté du profilé est situé opposé au premier côté du profilé, et
- l'élément d'extension comprend en outre une deuxième languette adaptée ou pouvant être adaptée à la deuxième rainure du profilé ;
d'où il résulte que le profilé est en outre extensible en utilisant la première rainure du profilé, l'élément d'extension, et la deuxième rainure d'un autre profilé similaire.

11. Système de profilé selon la revendication 9 ou 10, dans lequel
- la première rainure comprend une partie intérieure et une partie d'entrée, dans lequel la partie d'entrée comprend une zone ouverte et une zone de blocage,
- la hauteur de la zone ouverte est au moins la hauteur de la languette de l'élément d'extension,
- la hauteur de la zone de blocage est inférieure à la hauteur de la languette de l'élément d'extension, et
- la largeur de la zone ouverte est au moins la largeur de la languette de l'élément d'extension ;
d'où il résulte que la languette peut être poussée dans la rainure sans chauffer le profilé et sans utiliser d'adhésif dans une rainure et le joint entre l'élément d'extension et le profilé peut être bloqué.

12. Procédé de désassemblage d'un joint entre un premier profilé et un élément d'extension ou un autre profilé, dans lequel
- le premier profilé comprend
∘ une première surface et une deuxième surface, la deuxième surface étant parallèle à la première surface, les surfaces étant connectées par des côtés du profilé, dans lequel les côtés du profilé et les surfaces du profilé se rencontrent au niveau des bords du profilé,
∘ au moins deux couches, dans lequel la première couche comprend la première surface et la deuxième couche comprend la deuxième surface,
∘ un matériau thermoplastique entre les couches, et
∘ une première rainure dans au moins un côté, dans lequel
∘ la première rainure est située de telle manière qu'au moins une couche qui comprend un matériau thermoplastique se termine au niveau de la première rainure ; et
- le joint comprend
∘ une languette située dans la première rainure, dans lequel la languette est comprise par l'élément d'extension ou un autre profilé ;
dans lequel le procédé comprend
- le chauffage du premier profilé de manière à ce que le matériau thermoplastique fonde, d'où il résulte
que la hauteur de la rainure peut être augmentée en sortant le profilé de l'élément d'extension ou de l'autre profilé, d'où il résulte que la languette peut être sortie de la rainure.

13. Procédé de fabrication du profilé selon l'une quelconque des revendications 1 à 9, le procédé comprenant
- la mise à disposition d'un panneau comprenant
∘ une première surface et une deuxième surface, la deuxième surface étant opposée à la première surface, les surfaces étant connectées par des côtés du panneau, dans lequel les côtés du panneau et les surfaces du panneau se rencontrent au niveau des bords du panneau,
∘ au moins deux couches, dans lequel la première couche comprend la première surface et la deuxième couche comprend la deuxième surface, et
∘ un matériau thermoplastique entre les couches ; et
- l'usinage d'une première rainure dans au moins un côté du panneau ou d'un profilé constitué du panneau.

14. Procédé selon la revendication 13, comprenant en outre
- le pressage en forme du panneau en un profilé curvilinéaire, et
- l'usinage d'une première rainure dans au moins un côté du panneau avant le pressage en forme.

15. Procédé selon la revendication 14, comprenant
- le pressage en forme du panneau en un profilé curvilinéaire de telle manière que la première rainure est située dans un premier côté du profilé, dans lequel le premier côté du profilé comprend un premier bord du profilé, et la surface normale à la première surface du profilé change le long du premier bord du profilé.
